(19) Europäisches Patentamt
European Patent Office
Office européen des brevets

(11) EP 2 675 885 B1

(12) **EUROPEAN PATENT SPECIFICATION**

(45) Date of publication and mention of the grant of the patent:
**25.10.2017 Bulletin 2017/43**

(21) Application number: **12705948.3**

(22) Date of filing: **16.02.2012**

(51) Int Cl.:
***C11D 3/39*** (2006.01) ***C11D 3/386*** (2006.01)

(86) International application number:
**PCT/US2012/025363**

(87) International publication number:
**WO 2012/112741 (23.08.2012 Gazette 2012/34)**

(54) **COMPOSITIONS AND METHODS OF BLEACHING**

BLEICHUNGSZUSAMMENSETZUNGEN UND -VERFAHREN

COMPOSITIONS ET PROCÉDÉS DE BLANCHIMENT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **16.02.2011 US 201161443577 P**

(43) Date of publication of application:
**25.12.2013 Bulletin 2013/52**

(73) Proprietor: **The Procter & Gamble Company**
**Cincinnati, OH 45202 (US)**

(72) Inventors:
- **DYKSTRA, Robert, Richard**
  **West Chester, Ohio 45069 (US)**
- **DITULLIO, Daniel, Dale, Jr.**
  **Hamilton, Ohio 45011 (US)**
- **TREMBLAY, Mario, Elmen**
  **West Chester, Ohio 45069 (US)**
- **GUSTWILLER, Marc, Eric**
  **Cincinnati, Ohio 45239 (US)**

(74) Representative: **Kellenberger, Jakob**
**NV Procter & Gamble**
**Services Company S.A.**
**Temselaan 100**
**1853 Strombeek-Bever (BE)**

(56) References cited:
**WO-A1-02/48307**
**WO-A1-2004/000985**
**WO-A1-2009/112993**
**WO-A1-2011/005804**
**DE-A1-102009 017 722**
**US-B1- 6 306 812**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 675 885 B1

## Description

### FIELD OF INVENTION

The present application relates to compositions and methods of bleaching that are useful for the bleaching of oxidizable substrates, including stains in solution and on surfaces such as fabric, dishes, countertops, dentures and the like. The compositions include: 1) a metal bleach catalyst which is a complex of a transition metal and a macrocyclic ligand, wherein the metal bleach catalyst is present in the composition in an amount ranging from 0.0001% to 10%, based on total weight of the composition, and 2) a bleaching primer, wherein the bleaching primer is selected from the group consisting of diacyl peroxide, and mixtures thereof, and wherein the composition has a molar ratio of bleaching primer to metal bleach catalyst of from 1:20 to 100:1, and a primary oxidant selected from a group consisting of hydroperoxides, dialkyl peroxides, peroxyketals, cyclic peroxides, and mixtures thereof.

### BACKGROUND OF INVENTION

The addition of metal bleach catalysts (MBCs), such as those described in US 6,306,812, WO09839098A1 and WO09839406A1, are one option to increase the bleaching performance of cleaning compositions and/or fabric care compositions. As an example, when cleaning compositions are employed to pretreat and/or clean fabric articles, the addition of certain metal bleach catalysts may increase the bleaching performance on some stains before the wash, through the wash, or immediately after the wash. However, the addition of other metal bleach catalysts may increase the bleaching performance on some stains during a drying process or over extended periods of time after drying (during which time some stains can continue to fade due to metal-catalyzed autoxidation reactions). Unfortunately, delayed bleaching performance is possible with some metal bleach catalysts, resulting in a benefit that is not recognized in a timely manner by the consumer. The delay in bleaching or bleaching performance is referred to as a "bleaching lag time." Generally, a metal bleach catalyst is considered to have a bleaching lag time when a consumer does not recognize the full bleaching performance associated with a cleaning composition containing the metal bleach catalyst in a preferred amount of time.

Reduced recognition of effective bleaching performance at early touch points in the laundering process can lead consumers to unnecessarily rewash or retreat fabric articles. Therefore, achieving recognizable bleaching performance out of the washer and/or immediately after drying is important to demonstrate that the metal bleach catalyst containing cleaning compositions are working effectively. Accordingly, there is a continued interest in reducing the bleaching lag times of bleach metal catalysts that are employed in cleaning compositions and/or fabric care compositions. Such continued interest is applicable to the bleaching of any oxidizable substrate.

### SUMMARY OF INVENTION

According to one embodiment, the present disclosure provides for a composition comprising: (a) a metal bleach catalyst which is a complex of a transition metal and a macrocyclic ligand, wherein the metal bleach catalyst is present in the composition in an amount ranging from 0.0001% to 10%, based on total weight of the composition, and wherein the metal bleach catalyst is preferably a complex of a transition metal and a cross-bridged macropolycyclic ligand; and (b) a bleaching primer, wherein the bleaching primer is selected from a group consisting of diacyl peroxide, and mixtures thereof, and wherein the bleaching primer is preferably present in the composition in an amount ranging from 0.0001% to 1.0%, based on total weight of the composition;

wherein the composition has a molar ratio of bleaching primer to metal bleach catalyst of from 1:20 to 100:1, preferably from 1:2 to 50:1, and more preferably from 1:1 to 20:1; and wherein the composition further comprises a primary oxidant selected from a group consisting of hydroperoxides, dialkyl peroxides, peroxyketals, cyclic peroxides, and mixtures thereof.

In another embodiment, a bleaching method comprising: (a) providing an oxidizable substrate; (b) providing a bleaching composition that comprises: (1) a metal bleach catalyst which is a complex of a transition metal and a cross-bridged macropolycyclic ligand, wherein the metal bleach catalyst is present in an amount ranging from 0.0001 % to 10%, based on total weight of the composition; and (2) a bleaching primer, wherein the bleaching primer is selected from a group consisting of diacyl peroxide, and mixtures thereof, and wherein the bleaching primer is preferably present in the composition in an amount ranging from 0.0001% to 1.0%, based on total weight of the composition; wherein the composition preferably has a molar ratio of bleaching primer to metal bleach catalyst of from 1:20 to 100:1, more preferably from 1:1 to 20:1; and (c) contacting the oxidizable substrate with the bleaching composition; wherein a Lag Time Reduction Index for the metal bleach catalyst is greater than or equal to 20%, as measured by Bleaching Lag Time Protocol I; and wherein the bleaching composition further comprises a primary oxidant selected from a group consisting of hydroperoxides, dialkyl peroxides, peroxyketals, cyclic peroxides, and mixtures thereof.

BRIEF DESCRIPTION OF THE DRAWINGS

Figure 1 depicts a graph that charts UV-Visible absorbance against time.

DETAILED DESCRIPTION OF THE INVENTION

Definitions

As used herein, the term "comprising" means various components conjointly employed in the preparation of the composition or methods of the present disclosure. Accordingly, the terms "consisting essentially of" and "consisting of" are embodied in the term "comprising".

As used herein, the articles including "the", "a" and "an" when used in a claim or in the specification, are understood to mean one or more of what is claimed or described.

As used herein, the terms "include", "includes" and "including" are meant to be non-limiting.

As used herein, the term "plurality" means more than one.

As used herein, the term "cleaning compositions" includes compositions and formulations designed for cleaning and/or treating fabric, dishes, countertops, dentures, hard surfaces, soft surfaces and the like.

As used herein, the term "fabric care compositions" includes compositions and formulations designed for treating textiles and fabrics, such as, but not limited to, laundry cleaning compositions and detergents, laundry soap products, fabric softening compositions, fabric enhancing compositions, fabric freshening compositions, laundry prewash, laundry pretreat, laundry additives, spray products, and the like and may have a form selected from granular, powder, liquid (including heavy duty liquid ("HDL") detergents), gels, pastes, bar form, unit dose, and/or flake formulations, laundry detergent cleaning agents, laundry soak or spray treatments, pre-treatments, fabric treatment compositions, dry cleaning agent or composition, laundry rinse additive, wash additive, post-rinse fabric treatment, ironing aid, unit dose formulation, delayed delivery formulation, and the like. Such compositions maybe used as a pre-laundering treatment, a post-laundering treatment, or may be added during the rinse or wash cycle of the laundering operation.

As used herein, the general terms "composition" or "compositions" encompass any and all cleaning compositions and formulations and/or fabric care compositions and formulations.

As used herein, the terms "fabric", "textile", and "cloth" are used non-specifically and may refer to any type of flexible material consisting of a network of natural or artificial fibers, including natural, artificial, and synthetic fibers, such as, but not limited to, cotton, linen, wool, polyester, nylon, silk, acrylic, and the like, including blends of various fabrics or fibers.

As used herein, the term "oxidizable substrate" is used to describe any soluble, partly soluble or insoluble compound, chemical or substance that is present in solution or absorbed onto or into a material, wherein at least a portion of the compound, chemical or substance is capable of being oxidized or bleached by an oxidation reaction. One or more oxidizable substrates can be present together in any combination (e.g., stains, soils and the like), with or without additional carrier materials. The term oxidizable substrate also includes, but is not limited to, fabrics, textiles, hard surfaces and soft surfaces to be treated, laundered, oxidized, bleached, decolorized, or the like. As a non-limiting example, beta-carotene is an oxidizable substrate. Beta-carotene may be present within an unsaturated oil, which is also an oxidizable substrate. In addition, the combination of beta-carotene and unsaturated oil is also an oxidizable substrate. Moreover, such combination may be present within an oily red food stain, which also is an oxidizable substrate, and the oily red food stain may be present on or in a fabric, which also is an oxidizable substrate by itself or in any combination with one or more of the components described above. Additionally, the fabric may contain fabric dyes, which are also oxidizable substrates. All such oxidizable substrates can react by way of any known oxidization reaction, including single-electron reactions such as hydrogen atom abstraction and two-electron reactions such as oxygen transfer processes.

As used herein, the term "substantially devoid of primary oxidant" means that the ratio of primary oxidant (*e.g.*, a peroxygen bleach such as hydrogen peroxide) to metal bleach catalyst on a molar basis is less than 0.02 (*i.e.,* less than 1:50). In other words, the term "substantially devoid of primary oxidant" refers to 0 - 2% by molar weight on an oxygen basis of peroxygen bleach, or that is to say 0 - 0.02 equivalents of primary oxidant with respect to the equivalents of metal bleach catalyst. It is understood that very low levels of some bleaching species can be present due to impurities in formulation ingredients, such as peroxides present from autoxidation of certain ethoxylated surfactants or perfume raw materials. Very low levels of hydrogen peroxide, for example, could be formed due to hydrolysis of peracids. Such low levels of a bleach species are considered substantially devoid of said bleach species.

As used herein, the term "bleaching lag time" is used to describe a bleaching performance or benefit delay, wherein the bleaching or oxidation associated with a particular metal bleach catalyst is not realized in a preferred time. A metal bleach catalyst has a bleaching lag time when the metal bleach catalyst, a primary oxidant and an oxidizable substrate are combined such that the value of the time required to bleach one-half of the oxidizable substrate (the "initial

bleaching period" or "$t_1$") is greater than or equal to twice the time required to bleach an additional one-quarter of the oxidizable substrate ("secondary bleaching period" or "$t_2$") as measured by the Bleach Lag Time Protocol I detailed herein. Accordingly, a metal bleach catalyst has a bleaching lag time when it has a Lag Time Ratio (further defined below) of greater than or equal to 2.

As used herein, the term "initial bleaching period" is used to describe the amount of time it takes to bleach one-half of the oxidizable substrate after the metal bleach catalyst, a primary oxidant and an oxidizable substrate are combined. The initial bleaching period is represented by "$t_1$" herein.

As used herein, the term "secondary bleaching period" is used to describe the amount of time after the initial bleaching period that it takes to bleach an additional one-quarter of the oxidizable substrate. In other words, the secondary bleaching period is the amount of time that it takes to bleach half of the remaining oxidizable substrate after completion of the initial bleaching period. The secondary bleaching period is represented by "$t_2$" herein.

As used herein, the term "Lag Time Ratio" or "LTR" is defined as the calculated value of the initial bleaching period divided by the secondary bleaching period. Accordingly, the lag time ratio is defined as $t_1/t_2$.

As used herein, the term "Lag Time Reduction Index" or "LTRI" is defined as the calculated value of the initial bleaching period of a metal bleach catalyst not in the presence of a bleaching primer ("$t_1$"), minus the initial bleaching period of the same metal bleach catalyst in the presence of a bleaching primer ("$t_{1BP}$"), divided by $t_{1BP}$, and then multiplied by 100%. Accordingly, the Lag Time Reduction Index is defined as $((t_1 - t_{1BP}) / t_{1BP}) \times 100\%$. The values of $t_1$ and $t_{1BP}$ are measured by the Bleach Lag Time Protocol I detailed herein.

Unless otherwise noted, all component or composition levels are in reference to the active portion of that component or composition, and are exclusive of impurities, for example, residual solvents or by-products, which may be present in commercially available sources of such components or compositions.

All percentages and ratios are calculated by weight unless otherwise indicated. All percentages and ratios are calculated based on the total composition unless otherwise indicated.

It should be understood that every maximum numerical limitation given throughout this specification includes every lower numerical limitation, as if such lower numerical limitations were expressly written herein. Every minimum numerical limitation given throughout this specification will include every higher numerical limitation, as if such higher numerical limitations were expressly written herein. Every numerical range given throughout this specification will include every narrower numerical range that falls within such broader numerical range, as if such narrower numerical ranges were all expressly written herein.

Metal Bleach Catalyst Containing Compositions:

The present application relates to compositions (*e.g.*, cleaning compositions and/or fabric care compositions) and bleaching methods that are useful for bleaching oxidizable substrates, including stains in solution and on surfaces such as fabric, dishes, countertops, dentures and the like. The compositions include 1) a metal bleach catalyst which is a complex of a metal and a macrocyclic ligand, wherein the metal bleach catalyst is present in the composition in an amount ranging from 0.0001% to 10%, based on total weight of the composition, and 2) a bleaching primer, wherein the composition has a molar ratio of bleaching primer to metal bleach catalyst of from 1:20 to 100:1. The compositions may have a pH range of from 2.5 to 10, or from 4 to 8.5, or from 5 to 7.5.

The metal bleach catalysts utilized in the compositions and bleaching methods described herein are designed to increase the primary oxidant (*e.g.*, peroxygen compounds) bleaching rate of an oxidizable substrate. For example, the bleaching rate of a tea stain by hydroperoxides, or other peroxygen compounds like peracid or hydrogen peroxide, can be increased in the presence of a metal bleach catalyst. As another example, the bleaching rate of an oily red food stain by hydroperoxides found within such a stain can be increased in the presence of a metal bleach catalyst. Accordingly, in various embodiments of the compositions and methods, the primary oxidant(s) may be present in the compositions or may already be present within the stain.

Without wishing to be bound by theory, it is believed that the transition metal of the metal bleach catalyst interacts with the primary oxidant that is present in the solution or within the stain. Such interactions can lead to higher oxidation state transition metal species in the metal bleach catalyst - species that are capable of one-electron oxidation (including for example hydrogen atom abstraction from stain molecules or chromophores and/or from the unsaturated oils containing such chromophores) - which in turn leads to the generation of more radical species within the stain that can interact with atmospheric oxygen. Such interactions between radicals and atmospheric oxygen can lead to formation of further radicals, thus propagating an autoxidation reaction. Accordingly, it is believed that compositions containing metal bleach catalysts with higher oxidation state transition metal species will bleach oxidizable substrates quicker than compositions containing metal bleach catalysts with lower oxidation state transition metal species. For example, when the employed metal bleach catalyst is a preformed complex of a metal such as manganese and a cross-bridged macrocyclic ligand, the Mn(IV) or Mn(V) species can abstract hydrogen atoms to further catalyze autoxidation reactions and/or such species can transfer oxygen to stain chromophores. However, the presence of lower oxidation state transition

metal species may reduce the concentration of higher oxidation state transition metal species in the metal bleach catalyst, for example, through comproportionation. Continuing from the prior example, when the employed metal bleach catalyst is a preformed complex of a metal such as manganese and a cross-bridged macrocyclic ligand, the presence of manganese species such as Mn(II) can reduce the concentration of the Mn(IV) and Mn(V) species through comproportionation. In addition, hydroperoxides in the presence of transition metal catalysts can produce alkoxy radicals which can also abstract hydrogen atoms (e.g., in presence of polyunsaturated fatty acids) to further catalyze autoxidation reactions.

As noted above, compositions that employ metal bleach catalysts such as those utilized in the compositions detailed herein (*e.g.*, where the metal bleach catalyst is a preformed complex of a metal such as manganese and a macrocyclic ligand) may be burdened by the bleaching lag times associated with the particular employed metal bleach catalysts. A metal bleach catalyst is said to have a bleaching lag time when the bleaching or oxidation associated with the particular employed metal bleach catalyst is not realized in a preferred time. Accordingly, a metal bleach catalyst has a bleaching lag time when the bleach metal catalyst and an oxidizable substrate are combined such that the value of the time required to bleach one-half of the oxidizable substrate (the "initial bleaching period" or "$t_1$") is greater than the time required to bleach an additional one-quarter of the oxidizable substrate ("secondary bleaching period" or "$t_2$"), as defined by the Bleach Lag Time Protocol I detailed herein. Numerically, a metal bleach catalyst has a bleaching lag time when the metal bleach catalyst has a Lag Time Ratio of greater than 3, greater than 2, or greater than 1. It is important to note that not all metal bleach catalysts have bleaching lag times. Accordingly, compositions and methods that employ metal bleach catalysts that do not have a bleaching lag time (*i.e.,* a Lag Time Ratio less than 1) are outside the scope of this application.

It has surprisingly been found that the bleaching lag times of certain metal bleach catalysts may be mitigated by the presence of one or more bleaching primers. Without being bound by theory, it is believed that the presence of one or more bleaching primers can influence the oxidation state of the transition metal species of those metal bleach catalysts, therefore enabling the metal bleach catalysts to interact more effectively with the primary oxidant, thus enabling compositions and methods with shorter initial bleaching periods, shorter bleaching lag times, and smaller Lag Time Ratios.

The mitigation of the bleaching lag times for particular metal bleach catalysts can be evidenced by the value of a Lag Time Reduction Index ("LTRI"). The LTRI is equal to $((t_1 - t_{1BP}) / t_{1BP}) \times 100\%$. The $t_1$ value is the initial bleaching period of a metal bleach catalyst not in the presence of a bleaching primer. The $t_{1BP}$ value is the initial bleaching period of a metal bleach catalyst in the presence of a bleaching primer. The values of $t_1$ and $t_{1BP}$ are determined by the Bleach Lag Time Protocol I detailed herein. For embodiments of the compositions and methods described herein, the LTRI of the employed bleach metal catalyst may be greater than or equal to 20%, greater than or equal to 50%; greater than or equal to 100%; or greater than or equal to 200%.

Although the Bleaching Lag Time Protocol I maybe employed to measure the bleaching lag times for any applicable bleach metal catalyst containing composition, the particular metal bleach catalyst employed to generate the chart of Figure 1 is 5,12-diethyl-1,5,8,12-tetraaza-bicyclo[6.6.2]hexadecane manganese (II) chloride. Referring to Figure 1, the data points depicted by squares illustrate the measured UV-Visible absorbance versus time for an oxidizable substrate (*e.g.*, 0.065% Tropaeolin-O solution) combined with 5,12-diethyl-1,5,8,12-tetraaza-bicyclo[6.6.2]hexadecane manganese (II) chloride and a primary oxidant (*e.g.*, tert-butyl hydroperoxide) while not in the presence of a bleaching primer. The time in which it takes the UV-Visible absorbance measurement to decrease to 50% of the original starting value (starting value measured immediately after the oxidizable substrate, the primary oxidant and the MBC are combined) is noted as $t_1$, or the initial bleaching period. After the initial bleaching period, the time in which it takes the UV-Visible absorbance measurement to decrease another 25% of the original starting value is noted as $t_2$. For the particular metal bleach catalyst (MBC) of 5,12-diethyl-1,5,8,12-tetraaza-bicyclo[6.6.2]hexadecane manganese (II) chloride, $t_1$ is 43 minutes and $t_2$ is 3 minutes. Accordingly, the LTR for 5,12-diethyl-1,5,8,12-tetraaza-bicyclo[6.6.2]hexadecane manganese (II) chloride is 43/3, or 14.3. Accordingly, 5,12-diethyl-1,5,8,12-tetraaza-bicyclo[6.6.2]hexadecane manganese (II) has a bleaching lag time, and therefore compositions and bleaching methods employing such a MBC are within the scope of this application.

The data points depicted by triangles illustrate the UV-Visible absorbance measurements versus time for an oxidizable substrate (*e.g.*, 0.065% Tropaeolin-O solution) combined with 5,12-diethyl-1,5,8,12-tetraaza-bicyclo[6.6.2]hexadecane manganese (II) chloride and a primary oxidant (*e.g.,* tert-butyl hydroperoxide), while in the presence of a bleaching primer (*e.g.,* peracetic acid). The time in which it takes the UV-Visible absorbance measurement to decrease to 50% of the original starting value is noted as $t_{1BP}$, or the initial bleaching period of the MBC in the presence of a bleaching primer. For 5,12-diethyl-1,5,8,12-tetraaza-bicyclo[6.6.2]hexadecane manganese (II) chloride, $t_{1BP}$ is 9 minutes. Accordingly, the LTRI for the particular MBC of 5,12-diethyl-1,5,8,12-tetraaza-bicyclo[6.6.2]hexadecane manganese (II) chloride is $((43-9) / 9) \times 100\%$, or 378%.

Still referring to Figure 1, the data points depicted by Xs illustrate the measured UV-Visible absorbance versus time for an oxidizable substrate (*e.g.*, 0.065% Tropaeolin-O solution) combined only with a primary oxidant (*e.g.*, tert-butyl hydroperoxide). For this particular run, the Bleaching Lag Time Protocol I was followed, but only the primary oxidant was added to the testing solution in Step C. Even after 55 minutes, the oxidizable substrate combined with only the

primary oxidant does not show a significant reduction in the UV-Visible absorbance measurements. The data points depicted by diamonds illustrate the measured UV-Visible absorbance versus time for an oxidizable substrate (*e.g.*, 0.065% Tropaeolin-O solution) combined with 5,12-diethyl-1,5,8,12-tetraaza-bicyclo[6.6.2]hexadecane manganese (II) chloride and a bleaching primer (*e.g.*, peracetic acid), but in the absence of a primary oxidant. For this particular run, the Bleaching Lag Time Protocol I was followed, but only the MBC was added to the testing solution in Step C. Even after 80 minutes, the oxidizable substrate combined with the MBC and the bleaching primer, but in the absence of the primary oxidant, does not show a significant reduction in the UV-Visible absorbance measurements (less than 20% reduction from the original measured value).

Further, in determining the UV-Visible absorbance measurements associated with $t_1$, $t_2$ and $t_{1BP}$ from the charted data, it may be necessary to account for a small reduction in absorbance due solely to the bleaching primer, especially for metal bleach catalysts that have high values for $t_1$, $t_2$ and $t_{1BP}$. For example, as depicted in Figure 1, the UV-Visible absorbance measurement reduction due solely to the bleaching primer at $t_{1BP}$ is about 0.03. This value can be determined by the data points depicted by diamonds that illustrate the measured UV-Visible absorbance versus time for the oxidizable substrate combined with the MBC and bleaching primer, but in the absence of a primary oxidant. Accordingly, when determining the UV-Visible absorbance measurement for 5,12-diethyl-1,5,8,12-tetraaza-bicyclo[6.6.2]hexadecane manganese (II) at $t_{1BP}$, a value of about 0.03 (the UV-Visible absorbance due solely to the bleaching primer) should be subtracted from the absorbance values measured by the spectrometer.

For clarity, the UV-Visible absorbance measurement data illustrated in the chart of Figure 1 is reproduced in the table below.

**Table A: Data for Figure 1**

| Time (min) | MBC + Bleaching Primer | MBC + Primary Oxidant | MBC + Primary Oxidant + Bleaching Primer | Primary Oxidant |
|---|---|---|---|---|
| 0 | 0.9678 | 0.8500 | 0.9030 | 0.9549 |
| 1 | 0.9632 | 0.8443 | 0.8225 | 0.9606 |
| 2 | 0.9593 | 0.8438 | 0.7735 | 0.9638 |
| 3 | 0.9555 | 0.8434 | 0.7227 | 0.9661 |
| 4 | 0.9517 | 0.8444 | 0.6875 | 0.9676 |
| 5 | 0.9483 | 0.8440 | 0.6406 | 0.9594 |
| 6 | 0.9450 | 0.8436 | 0.5944 | 0.9613 |
| 7 | 0.9414 | 0.8430 | 0.5669 | 0.9635 |
| 8 | 0.9372 | 0.8427 | 0.5228 | 0.9555 |
| 9 | 0.9338 | 0.8426 | 0.4771 | 0.9731 |
| 10 | 0.9299 | 0.8423 | 0.4334 | 0.9693 |
| 15 | 0.9124 | 0.8414 | 0.2951 | 0.9611 |
| 20 | 0.8940 | 0.8394 | 0.1412 | 0.9635 |
| 25 | 0.8803 | 0.8340 | 0.0934 | 0.9734 |
| 30 | 0.8644 | 0.8169 | 0.0780 | 0.9744 |
| 35 | 0.8497 | 0.8148 | 0.0722 | 0.9712 |
| 40 | 0.8403 | 0.6396 | 0.0718 | 0.9660 |
| 45 | 0.8270 | 0.3465 | 0.0699 | 0.9738 |
| 50 | 0.8149 | 0.1551 | 0.0668 | 0.9752 |
| 55 | 0.8038 | 0.0913 | 0.0651 | 0.9740 |

Metal Bleach Catalyst:

Metal bleach catalysts useful in the compositions and methods of bleaching described herein can consist of a pre-formed metal catalyst such as described in US 2009/0054293 A1, which were designed to provide a superior benefit

to safety profile for the bleaching of stains during and/or after the wash. The ligand associated with such catalysts can serve to control or enhance the properties of the metal bleach catalyst by altering a variety of metal bleach catalyst properties, including but not limited to stain or fabric selectivity, deposition, reactivity, and so forth. The design of such metal bleach catalysts can enable improved benefit to risk ratio, wherein said risk may include negatives associated with uncontrolled bleaching chemistry, such as fabric dye damage found with free transition metal contamination.

Generally speaking, the metal bleach catalysts, also known as complexes of metals and organic substances, are of the general formula: $[M_aL_kX_n]Y_m$, in which M represents the metal, L represents the ligand, and X represents a coordinating species. Y represents the counterion.

The transition metal may be selected from the group consisting of Mn(II), Mn(III), Mn(IV), Mn(V), Fe(II), Fe(III), Fe(IV), Co(I), Co(II), Co(III), Ni(I), Ni(II), Ni(III), Cu(I), Cu(II), and Cu(III). In one embodiment, the ligand is coordinated by at least three (or at least four) donor atoms to the same transition metal. In one embodiment, the ligand is coordinated by four donor atoms to the same transition metal.

In one embodiment the ligand is an organic macrocycle ring containing 3, 4, or more donor atoms (wherein at least 3, or at least 4, of these donor atoms are N) separated from each other by covalent linkages of at least 1, at least 2, or at least 3, non-donor atoms, wherein 2-5 (3-4 or 4) of these donor atoms are coordinated to the same transition metal in the complex.

In another embodiment, the ligand is an organic macrocycle ring having a linking moiety to form of a macropolycyclic rigid ligand, wherein the linking moiety is a cross-bridging chain, which covalently connects at least two non-adjacent donor atoms of the organic macrocycle ring, the covalently connected non-adjacent donor atoms being bridgehead donor atoms which are coordinated to the same transition metal in the complex, and wherein said linking moiety (e.g., a cross-bridged chain) comprises from 2 to 10 atoms (wherein the cross-bridged chain is selected from 2, 3, or 4 non-donor atoms, and 4-6 non-door atoms with a further donor atom), including for example, a cross-bridge which is the result of a Mannich condensation of ammonia and formaldehyde.

Optionally, the macropolycyclic rigid ligand may comprise one or more non-macropolycyclic ligands, preferably monodentate ligands, such as those selected from the group consisting of $H_2O$, ROH, $NR_3$, RCN, $OH^-$, $OOH^-$, $RS^-$, $RO^-$, $RCOO^-$, $OCN^-$, $SCN^-$, $N3^-$, $CN^-$, $F^-$, $Cl^-$, $Br^-$, $I^-$, $O2^-$, $NO3^-$, $NO2^-$, $SO_4^{2-}$, $SO_3^{2-}$, $PO_4^{3-}$, organic phosphates, organic phosphonates, organic sulfates, organic sulfonates, and aromatic N and O donors.

Suitable ligands of the present invention include a macropolycyclic rigid ligand of the formula:

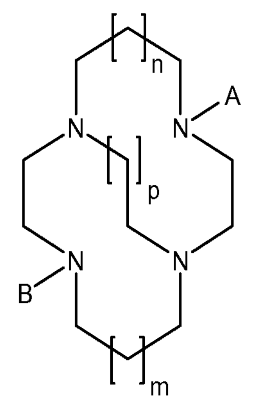

wherein n and m are integers individually selected from 1 and 2; p is an integer from 1 to 6; and A and B are independently selected from a group consisting of linear or branched, substituted or unsubstituted C1-C20 alkyl, alkylaryl, alkenyl or alkynyl. In certain useful ligands, m = n = p = 1, and A and B are independently selected from the group consisting of methyl, ethyl, propyl, isopropyl, butyl, isobutyl, sec-butyl, tert-butyl, $C_5$-$C_{20}$ alkyl, and benzyl, optionally substituted with moieties selected from the group consisting of COOM, wherein M is selected from H and a charge balancing metal ion, CN and mixtures thereof. In other useful ligands, A and B are independently selected from methyl, ethyl and propyl. In other useful ligands, A and B are ethyl.

Particular transition-metal bleach catalysts of macrocyclic rigid ligands which are suitable for use in the compositions and bleaching methods described herein may include known compounds that conform with the general description above, as well as any novel compounds expressly designed for cleaning compositions (fabric care or otherwise). Specific non-limiting examples of appropriate metal bleach catalysts may include one or more of the following:

Dichloro-5,12-dimethyl-1,5,8,12-tetraazabicyclo[6.6.2]hexadecane Manganese(II);
Dichloro-5,12-diethyl-1,5,8,12-tetraazabicyclo[6.6.2]hexadecane Manganese(II);
Diaquo-5,12-dimethyl-1,5,8,12-tetraazabicyclo[6.6.2]hexadecane Manganese(II) Hexafluorophosphate;

Diaquo-5,12-diethyl-1,5,8,12-tetraazabicyclo[6.6.2]hexadecane Manganese(II) Hexafluorophosphate;
Aquo-hydroxy-5,12-dimethyl-1,5,8,12-tetraazabicyclo[6.6.2]hexadecane Manganese(III) Hexafluorophosphate;
Diaquo-5,12-dimethyl-1,5,8,12-tetraazabicyclo[6.6.2]hexadecane Manganese(II) Tetrafluoroborate;
Dichloro-5,12-dimethyl-1,5,8,12 tetraazabicyclo[6.6.2]hexadecane Manganese(III) Hexafluorophosphate;
Dichloro-5,12-diethyl-1,5,8,12-tetraazabicyclo[6.6.2]hexadecane Manganese(III) Hexafluorophosphate;
Dichloro-5,12-di-n-butyl-1,5,8,12-tetraaza bicyclo [6.6.2]hexadecane Manganese(II);
Dichloro-5,12-dibenzyl-1,5,8,12-tetraazabicyclo[6.6.2]hexadecane Manganese(II);
Dichloro-5-n-butyl-12-methyl-1,5,8,12-tetraaza-bicyclo[6.6.2]hexadecane Manganese(II);
Dichloro-5-n-octyl-12-methyl-1,5,8,12-tetraaza-bicyclo[6.6.2]hexadecane Manganese(II); and
Dichloro-5-n-butyl-12-methyl-1,5,8,12-tetraaza-bicyclo[6.6.2]hexadecane Manganese(II).

Particularly interesting metal bleach catalysts for employment in the cleaning compositions and methods of bleaching detailed herein are 5,12-dimethyl-1,5,8,12-tetraaza-bicyclo[6.6.2]hexadecane manganese (II) chloride and 5,12-diethyl-1,5,8,12-tetraaza-bicyclo[6.6.2]hexadecane manganese (II) chloride, and mixture thereof.

It is understood that the metal bleach catalyst of the present invention can undergo ligands exchange, including, but not limited to, an exchange of the chloride ligand(s) for water ligand(s), or any ligand capable of interacting with any oxidation state of the transition metal. Typical oxidation states of the metal include, for example, for manganese, the Mn(II), Mn(III), Mn(IV) and Mn(V) oxidation states, or mixtures thereof as described in WO-A-98/39098 and WO-A-98/39406.

The metal bleach catalyst may be present in the compositions in an amount ranging from 0.00001% to 10%, or from 0.0001% to 6%, or from 0.0003% to 3%; or from 0.001% to 1%; or from about 0.006% to 0.3%; or from 0.02% to 0.1%. More than 10% of a bleach metal catalyst in a composition can surprisingly increase the bleach lag time.

In some embodiments, the metal bleach catalyst may be present in the compositions in an amount ranging from 0.006% to 0.3%. Such a MBC range surprisingly provides a balance between providing sufficient catalytic bleaching rate on the low end and avoiding too great a bleaching lag time on the high end for compositions containing MBC and bleaching primer.

<u>Bleaching Primer:</u>

The compositions contain a bleaching primer that can surprisingly control the rate of reactions of the different metal bleach catalyst species with each other, with the primer oxidant, with the bleaching primer and with one or more oxidizable substrates. Without being bound by theory, the reaction of the bleaching primer with the metal bleach catalyst is believed to lead to rapid formation of higher metal oxidation state species, and the rapid reduction in lower metal oxidation state species. In particular embodiments wherein the metal bleach catalyst includes manganese as a transition metal, the higher metal oxidation state species may be Mn(III), Mn(IV) and Mn(V), and the lower metal oxidation state species may be Mn(II). The presence of higher levels of Mn(III) with the primary oxidant and an oxidizable substrate will result in reduced bleaching lag time compared to Mn(II). The formation of Mn(IV) and /or Mn(V) increases bleaching of the oxidizable substrate.

In some embodiments, the compositions include a bleaching primer that comprises a peroxygen source in the form of a peroxy acid. The source of the peroxy acid may be a preformed peroxy acid or any compound capable of producing, releasing or forming a peroxy acid. Non-limiting examples of preformed peroxy acids include, but are not limited to, peracetic acid, peroxylauric acid, N,N-phthaloylaminoperoxycaproic acid, magnesium monoperoxyphthalate, pyridine-3-peroxycarboxylic acid, and persulfates such as potassium hydrogen persulfate ($KHSO_5$, potassium caroate), commercially sold as Oxone®, available from DuPont Chemicals, and mixtures thereof. Non-limiting compounds capable of producing or releasing a peroxy acid include diacyl peroxides, peresters and bleach activators. Non-limiting examples of diacyl peroxides include, but are not limited to, C12-diacylperoxide, succinic acid peroxide, and benzoyl peroxide. Non-limiting examples of peresters include, but are not limited to, tert-butyl monoperoxymaleate.

In some embodiments, the compositions may contain a bleaching primer that includes a source of a primary oxidant. In other embodiments, the compositions may contain a primary oxidant that includes a source of bleaching primer.

In some embodiments, the source of peroxy acid is capable of releasing a peroxy acid by means of a perhydrolysis or a hydrolysis reaction. In embodiments where the triggered release of peroxy acid is by means of a hydrolysis reaction, the release can be accelerated by means of a catalyst, including an enzyme, as well as by means of a selection of preferred reaction conditions such as pH, heat, concentration and temperature. The enzyme may include a lipase, for example, commercial lipases such as Lipex™ and Lipolase™. Such enzymes may be contained in the compositions detailed in this application, or may be contained in an accompanying composition, such as a laundry detergent composition or an additive that is present with the compositions of the present disclosure.

In one embodiment, the metal bleach catalyst and bleaching primer are provided in the form of a single compartment unit dose laundry detergent article.

In another embodiment, a unit dose laundry detergent article wherein part or all of the bleaching primer is physically separated from the metal bleach catalyst by a means selected from the group consisting of:

a. at least 50% by weight of the bleaching primer being a solid;
b. at least 50% by weight of the bleaching primer being encapsulated by a water-soluble or dispersible barrier; and
c. at least 50% by weight of the bleaching primer being in a different compartment comprising less than 25% by weight of the metal bleach catalyst.

In another embodiment, a unit dose laundry detergent article comprising a metal bleach catalyst wherein part or all of the bleaching primer is physically separated from the enzyme by a means selected from the group consisting of:

a. at least 50% by weight of the bleaching primer being a solid;
b. at least 50% by weight of the bleaching primer or the enzyme being encapsulated by a water-soluble or dispersible barrier; and
c. at least 50% by weight of the bleaching primer being in a different compartment comprising less than 25% by weight of the enzyme; and
d. at least 50% by weight of the enzyme being in a different compartment comprising less than 25% by weight of the bleaching primer;

wherein the enzyme is capable of reducing the Lag Time Reduction Index for the metal bleach catalyst by greater than or equal to 20%.

In another embodiment, a unit dose laundry detergent article wherein part or all of the bleaching primer is physically separated from enzyme by a means selected from the group consisting of:

a. at least 50% by weight of the bleaching primer being a solid;
b. at least 50% by weight of the bleaching primer being encapsulated by a water-soluble or dispersible barrier; and
c. at least 50% by weight of the bleaching primer being in a different compartment comprising less than 25% by weight of the enzyme.

Bleach Lag Time Protocol I provides a convenient method to measure the values of $t_1$, $t_2$, and $t_{1BP}$ that are used to calculate the LTRI. The protocol includes selection and levels of chemicals and stock solutions as well as protocol steps to enable convenient and timely measurements. Different compositions and conditions than those described in the Bleach Lag Time Protocol I can be employed for the purpose of demonstrating the benefits of reduced lag time, and the use of such different compositions and conditions may lead to the measurement of different values for $t_1$, $t_2$, and $t_{1BP}$ than would be measured via the Bleach Lag Time Protocol I. Such measurements are instructive; however, it is the Bleach Lag Time Protocol I that should be used to determine if 1) a metal bleach catalyst has a bleaching lag time and if 2) the LTRI for the metal bleach catalyst (in the presence of the bleaching primer) is greater than or equal to 20%; and thus conclude for example if a composition or method falls within the scope of the invention. For example, there may be situations in which the formulator may decide to use especially low levels of MBC and/or other formulation ingredients, wherein the observed rate of bleaching could in principle be slowed enough to make $t_1$, $t_2$, and $t_{1BP}$ measurements less convenient or more time consuming. To avoid such inconvenient protocols, the levels of formulation ingredients (e.g., MBC and bleaching primer) as well as other conditions (e.g., temperature) have been defined in the Bleach Lag Time Protocol I.

Bleach Lag Time Protocol II provides another convenient method to measure the values of $t_1$, $t_2$, and $t_{1BP}$ that are used to calculate the LTRI. The bleaching temperature is higher, and enables the experiment to be completed more quickly. For example, with Bleaching Primer A (peracetic acid), the LTRI for MBC-2 is 300% ($t_1$ of 8 min and $t_{1BP}$ of 2 min). The mitigation of the bleach lag times for particular metal bleach catalysts can be evidenced by the value of a Lag Time Reduction Index ("LTRI"). The LTRI is equal to $((t_1 - t_{1BP}) / t_{1BP}) \times 100\%$. For embodiments of the compositions and methods described herein, the LTRI of the employed bleach metal catalyst maybe greater than or equal to 20%, greater than or equal to about 50%; greater than or equal to 100%; or greater than or equal to 200%.

The bleaching primer maybe present in the compositions in an amount ranging from 0.05 equivalents to 100 equivalents with respect to the molar quantity of metal bleach catalyst in the composition. In other words, within the composition, the molar ratio of bleaching primer to metal bleach catalyst may be from 1:20 to 100:1. In certain embodiments of the compositions, the ratio of bleaching primer to metal bleach catalyst may be from 1:2 to 50:1, from 1:1 to 20:1, or from 2:1 to 10:1. Without being bound by theory, when the compositions detailed herein contain molar ratios of bleaching primer to metal bleach catalyst that are higher than 100:1, the bleaching primer is believed to compete with the primary oxidant, leading to a composition with a less than desired holistic performance. Compositions that contain molar ratios of bleaching primer to metal bleach catalyst that are higher than 100:1 are believed to have increased risk

of degradation of other cleaning ingredients within the composition.

Moreover, in compositions that contain molar ratios of bleaching primer to metal bleach catalyst that are higher than 100:1, the bleaching primer may change the concentration of different metal bleach catalyst species during the wash, including complexes of the metal bleach catalyst and the bleaching primer. This change in species may result in different charges on the transition metal and the overall complex, resulting in a change in selectivity for, and interaction with, particular oxidizable substrates. In one non-limiting example, cleaning compositions containing molar ratios of bleaching primer to metal bleach catalyst that are higher than 100:1 exhibited a reduced overall performance in the bleaching of red food stains on fabric.

In addition, when the absolute level of the metal bleach catalyst is present in the compositions in the range of from 0.006% to 0.3%, the ratio of bleaching primer to metal bleach catalyst may be from 1:2 to 10:1. When the metal bleach catalyst is present in the composition in the amount ranging from 0.006% to 0.06%, the ratio of bleaching primer to metal bleach catalyst may be from 2:1 to 10:1. When the metal bleach catalyst is present in the composition in the amount ranging from 0.06% to 0.3%, the ratio of bleaching primer to metal bleach catalyst may be from 1:2 to 2:1. Without wishing to be bound by theory, such compositions and ratios provide the desired balance of autoxidation performance with reduced bleaching lag time, and improved bleaching selectivity by minimizing unwanted bleaching that could occur by the bleaching primer if present at higher levels.

<u>Primary Oxidant:</u>

The compositions described herein further include one or more primary oxidants. In other embodiments, one or more primary oxidant may be present in the oxidizable substrate that is being bleached, in addition to one or more primary oxidant present in the compositions. Primary oxidants are selected from a group consisting of hydroperoxides, dialkyl peroxides, peroxyketals, cyclic peroxides, and mixtures thereof. The presence of a primary oxidant in the form of a hydrophobic hydroperoxide increases the concentration of hydroperoxide in hydrophobic oxidizable substrate. In some embodiments, the ratio of primary oxidant to bleaching primer in the composition may be from 1000:1 to 1:1, or from 100:1 to 5:1, or from 50:1 to 10:1.

Compositions and/or methods that are substantially devoid of a primary oxidant can have significant bleaching lag times. However, compositions and/or methods having ratio of primary oxidant to bleaching primer of higher than 1000:1 may lead to other problems. Without wishing to be bound by theory, compositions and/or methods having a ratio of primary oxidant to bleaching primer of higher than 1000:1 may change the oxidation state of the transition metal in an uncontrolled manner, leading to a lack of control of the overall charge of the metal bleach catalyst, and therefore a less preferred interaction between the metal bleach catalyst and the oxidizable substrate. Specifically, it is believed that such high levels of primary oxidant may lead to reduced deposition of the metal bleach catalyst and/or a non-preferred selectivity of the metal bleach catalyst for one oxidizable substrate versus another oxidizable substrate. It has been surprisingly found that the ratios of bleaching primer to metal bleach catalyst detailed above control the rate of bleaching by the primary oxidant, thereby reducing the bleaching lag time and mitigating the problems associated with too high a level of primary oxidant.

In another embodiment, the compositions that comprise a metal bleach catalyst may not comprise hydrogen peroxide. Although hydrogen peroxide can serve as a bleaching primer if used at appropriate levels within the scope of this invention, such compositions can lead to unwanted turnover of available oxygen. In addition, higher levels of hydrogen peroxide can reduce the performance of the metal bleach catalyst.

<u>Impact of Hydrophobicity Coordination of Additional Composition Ingredients</u>:

In another embodiment, we have surprisingly found that the proper selection of a formulation enabling fraction (*e.g.*, a surfactant system) can further decrease the bleaching lag time. The initial bleaching period can be additionally reduced by tuning the hydrophobicity of the metal bleach catalyst and the hydrophobicity of the formulation enabling fraction and the hydrophobicity of the bleaching primer and/or the primary oxidant. Without being bound by theory, the formulation enabling fraction shifts the equilibrium and increases the degree of interaction between the metal bleach catalyst and the bleaching primer and/or primary oxidant, and thus decreases the bleaching lag time. The proper selection of the formulation enabling fraction can reduce the interaction between the metal bleach catalyst and any possible formulation deactivating ingredients (*e.g.*, a chelant).

For more hydrophobic metal bleach catalysts such as those containing a ligand with a CLogP value of from -1.50 to -0.10, or from -1.10 to -0.30; or from -0.90 to -0.40; or from -0.75 to -0.55 (including but not limited to 5,12-diethyl-1,5,8,12-tetraaza-bicyclo[6.6.2]hexadecane manganese (II) chloride), the selection of a formulation enabling fraction with a HI value of 4.97 to 9.87, or from 5.48 to 8.71, or from 5.75 to 7.61, or from 6.01 to 7.07, and a primary oxidant with CLogP values of greater than or equal to -1.0, or greater than 0, or greater than 1.0, can result in a further decrease in bleaching lag time for the compositions and methods described herein. In still another embodiment, the

compositions and methods described herein may include a formulation deactivating ingredient (*e.g.*, a chelant) having a CLogP value of from -3.50 to - 0.10; or from -2.80 to -0.50; or from -2.30 to -1.50. In some embodiments wherein the formulation deactivation ingredient is a chelant, the chelant is in the form of a divalent chelant, and in some embodiments, the chelant is 1,2-dihydroxy-3,5-benzenedisulfonate.

Surprisingly, selecting certain ratios of metal bleach catalyst to formulation deactivation fraction allows for the desired control of bleaching lag time and/or catalyst activity. Chelants for example, can be used to scavenge fugitive transition metals and provide benefits, such as benefits on improved fabric stain removal. We believe that having too high of a level of certain chelants can increase the bleaching lag time and/or reduce catalyst activity. Controlling catalyst activity can be advantageous in the protection of certain sensitive formulation ingredients (*e.g.*, perfumes), however, less advantageous for maximizing catalyst activity during bleaching of the oxidizable substrate. The presence of formulation deactivating ingredients increases the need further for the composition and methods employing the bleaching primer to reduce the bleaching lag time.

For example, when the bleaching lag time is measured for MBC-2 and the formulation deactivating ingredient, 1,2-dihydroxy-3,5-benzenedisulfonate by means of the Bleach Lag Time Protocol II using Bleaching Primer A (peracetic acid), it is clear that the values of $t_1$, $t_2$, LTR, and $t_{1BP}$ used to calculate the LTRI indicate a significant increase in bleaching lag time requiring the use of the bleaching primer to reduce the bleaching lag time.

The ClogP values for the ligands of the metal bleach catalysts were determined using the commercially available version CSLogP™-3.0 [from ChemSilico]. In one embodiment, the ligands of the metal bleach catalysts may have a ClogP value in the range of from -1.50 to -0.10, from -1.10 to -0.30, from -0.90 to -0.40 or from -0.75 to -0.55. For example, the CLogP value for the ligand of 5,12-dimethyl-1,5,8,12-tetraaza-bicyclo[6.6.2]hexadecane manganese (II) chloride is calculated at -1.02 and the CLogP value for the ligand of 5,12-diethyl-1,5,8,12-tetraaza-bicyclo[6.6.2]hexadecane manganese (II) chloride is calculated at -0.64.

Optional Formulation Enabling Fraction:

Embodiments of the compositions may include a formulation enabling fraction which comprises at least one formulation enabling ingredient. Embodiments of the compositions may comprise, by weight, from 5% to 90% of a formulation enabling fraction, from 5% to 70% of a formulation enabling fraction, or from 5% to 40% of a formulation enabling fraction. The formulation enabling ingredient(s) that make up the formulation enabling fraction are surfactants, and may be anionic surfactants, nonionic surfactants, cationic surfactants, zwitterionic surfactants, ampholytic surfactants, and mixtures thereof.

The formulation enabling fraction may have a "Hydrophilic Index" or "HI" of from 4.0 to 10.0, from 5.0 to 9.9, from 5.5 to 8.7, from 5.8 to 7.6, or from 6.0 to 7.0. The Hydrophilic Index for a surfactant molecule is referred to herein as $HI_S$. The Hydrophilic Index for any given surfactant system can be calculated by summing the weight averaged $HI_S$ for each surfactant in the surfactant system. The Hydrophilic Index for a system of mixed surfactants ("$HI_C$") can be calculated as follows:

$$(1)\quad HI_C = \Sigma_y \text{ (weight \% of surfactant y in the surfactant system) x (}HI_S\text{ for surfactant y).}$$

$HI_S$ is calculated for each of the individual surfactants in the mixture as follows:

$$(2)\quad HI_S = 20 \text{ x (the molecular weight of the head group) / (the molecular weight the surfactant).}$$

In the case of ionic surfactants, the $HI_S$ in equation (2) are calculated for the surfactant ions and the weight percents in equation (1) are for the corresponding surfactant ions.

Table B below illustrates how the Hydrophilic Index is calculated for various surfactants that are commonly used in laundry detergents. In the following table "Cn" is the average chain length of the surfactant molecule, and "phobe" represents the molecular weight of the hydrophobic portion of the surfactant molecule. Likewise, "phil" is the molecular weight of the hydrophilic portion of the surfactant molecule. "Total" is the sum of the phobe and the phil, that is, the average molecular weight of the surfactant molecule. "WF phil" is the weight fraction of the philic portion, that is, the molecular weight of the philic portion divided by the total molecular weight.

The "$HI_S$" is the WF phil multiplied by 20. For ionic surfactants the $HI_S$ value is calculated for the surfactant ion

only (*i.e.,* the counterion is ignored).

**Table B**

| Surfactants | #EO | Cn | Phobe | Phil | Total | WF phil | $HI_S$ |
|---|---|---|---|---|---|---|---|
| **Nonionics** | | | | | | | |
| AE 23-3 | 3 | 12.5 | 176 | 149 | 325 | 0.459 | 9.17 |
| AE 23-5 | 5 | 12.5 | 176 | 237 | 413 | 0.574 | 11.48 |
| AE 23-6.5 | 6.5 | 12.5 | 176 | 303 | 479 | 0.633 | 12.65 |
| AE 23-9 | 9 | 12.5 | 176 | 413 | 589 | 0.701 | 14.02 |
| AE 24-7 | 7 | 13 | 183 | 325 | 508 | 0.640 | 12.80 |
| CMG | | 13 | 183 | 238 | 421 | 0.565 | 11.31 |
| **Anionics (anions)** | | | | | | | |
| C25AS | 0 | 13.5 | 190 | 96 | 286 | 0.336 | 6.71 |
| C25AE3.0S | 3 | 13.5 | 190 | 228 | 418 | 0.546 | 10.91 |
| C25AE1.8S | 1.8 | 13.5 | 190 | 175.2 | 365.2 | 0.480 | 9.59 |
| C11.8 LAS | 0 | 11.8 | 242.5 | 80 | 322.2 | 0.248 | 4.97 |
| C45E1.0S | 1 | 14.5 | 204 | 140 | 344 | 0.407 | 8.14 |
| C45E2.25S | 2.25 | 14.5 | 204 | 195 | 399 | 0.489 | 9.77 |
| C45E3.0S | 3 | 14.5 | 204 | 228 | 432 | 0.528 | 10.56 |
| Cationics (cations) | | | | | | | |
| C10APA | | 10 | 141 | 101 | 242 | 0.417 | 8.35 |
| C8-10 APA | | 9 | 127 | 101 | 228 | 0.443 | 8.86 |

The above list of common laundry detergent surfactants is only for the explanation of how to calculate HI index values, and is not limiting to the particular surfactants that may be employed in the liquid cleaning compositions detailed herein.

Suitable anionic surfactants for employment in the compositions described herein may include any of the conventional anionic surfactant types typically used in liquid detergent products. These include the alkyl benzene sulfonic acids and their salts as well as alkoxylated or non-alkoxylated alkyl sulfate materials. Non-limiting examples of anionic surfactants are the alkali metal salts of $C_{10-16}$ alkyl benzene sulfonic acids, more specifically, $C_{11-14}$ alkyl benzene sulfonic acids. In some embodiments, the alkyl group is linear and such linear alkyl benzene sulfonates are known as "LAS". Alkyl benzene sulfonates, and particularly LAS, are well known in the art. Such surfactants and their preparation are described for example in U.S. Pat. Nos. 2,220,099 and 2,477,383. More particular non-limiting examples of alkylbenzene sulfonates suitable for employment as formulation enabling ingredients include sodium and potassium linear straight chain alkylbenzene sulfonates in which the average number of carbon atoms in the alkyl group is from 11 to 14. One specific non-limiting example of a formulation enabling ingredient is sodium $C_{11}$-$C_{14}$, (*e.g.,* $C_{12}$) LAS.

Another exemplary type of suitable anionic surfactant is ethoxylated alkyl sulfate surfactants, known as "AES." Such materials, also known as alkyl ether sulfates or alkyl polyethoxylate sulfates, are those which correspond to the formula: $R'\text{--}O\text{--}(C_2H_4O)_n\text{--}SO_3M$ wherein R' is a $C_8$-$C_{20}$ alkyl group, n is from 1 to 20, and M is a salt-forming cation. In some embodiments, R' is $C_{10}$-$C_{18}$ alkyl, n is from 1 to 15, and M is sodium, potassium, ammonium, alkylammonium, or alkanolammonium. In more specific embodiments, R' is a $C_{12}$-$C_{16}$, n is from 1 to 6 and M is sodium.

The alkyl ether sulfates will generally be used in the form of mixtures comprising varying R' chain lengths and varying degrees of ethoxylation. Frequently such mixtures will inevitably also contain some non-ethoxylated alkyl sulfate materials, *i.e.,* surfactants of the above ethoxylated alkyl sulfate formula wherein n=0. Non-ethoxylated alkyl sulfates may also be added separately to the compositions or employed in any anionic surfactant component which may be present. Specific examples of non-alkoxylated, *e.g.*, non-ethoxylated, alkyl ether sulfate surfactants are those produced by the sulfation of higher $C_8$-$C_{20}$ fatty alcohols. Examples of primary alkyl sulfate surfactants may have the general formula: $ROSO_3^-M^+$ wherein R is typically a linear $C_8$-$C_{20}$ hydrocarbyl group, which may be straight chain or branched chain, and M is a water-solubilizing cation. In more specific examples, R is a $C_{10}$-$C_{15}$ alkyl, and M is alkali metal, more

specifically R is $C_{12}$-$C_{14}$ and M is sodium.

Another exemplary type of suitable anionic surfactant is mid-branched primary alkyl sulfate surfactants having an average carbon chain length of from 14 to 17 ("MBAS surfactants"). MBAS surfactants with a carbon chain length of 16 to 17 are known as HSAS surfactants. Employment of HSAS surfactants typically results in an increase in the hydrophobicity of the formulation enabling fraction. Without being bound by theory, it has been surprising found that this increased hydrophobicity of the formulation enabling fraction appears to lead to a decrease in bleaching lag time and/or an increase in metal bleach catalyst activity when used as described in the present invention.

Suitable nonionic (NI) surfactants for employment in the compositions described herein may comprise any of the conventional nonionic surfactant types typically employed in liquid detergent products. Such non-ionic surfactants include alkoxylated fatty alcohols and amine oxide surfactants. Non-limiting examples of suitable nonionic surfactants for use herein are alcohol alkoxylate nonionic surfactants. Alcohol alkoxylates are materials which correspond to the general formula: $R^1O(C_mH_{2m}O)_nH$ wherein $R^1$ is a $C_8$-$C_{16}$ alkyl group, m is from 2 to 4, and n ranges from 2 to 12. One example of a polyoxyethylene alkyl ether (alcohol alkoxylate) is $R_{12}H_{25}O(CH_2CH_2O)_7H$, also known as Laureth-7 or Surfonic L24-7 from Huntsman Corporation.

In some examples, the $R^1$ is an alkyl group, which may be primary or secondary, that comprises from 9 to 15 carbon atoms, or from 10 to 14 carbon atoms. In one embodiment, the alkoxylated fatty alcohols will also be ethoxylated materials that contain from 2 to 12 ethylene oxide moieties per molecule, or from 3 to 10 ethylene oxide moieties per molecule. More specific examples of alkoxylated fatty alcohol nonionic surfactants have been marketed under the trade names Neodol® and Dobanol by the Shell Chemical Company.

Another suitable type of nonionic surfactant useful herein are the amine oxide surfactants. Amine oxides are materials which are often referred to in the art as "semi-polar" nonionics. Amine oxides have the formula: $R(EO)_x(PO)_y(BO)_zN(O)(CH_2R')_2\ H_2O$. In this formula, R is a relatively long-chain hydrocarbyl moiety which can be saturated or unsaturated, linear or branched, and can contain from 8 to 20, or from 10 to 16 carbon atoms, and in some embodiments can be $C_{12}$-$C_{16}$ primary alkyl. R' is a short-chain moiety that may be selected from hydrogen, methyl and $--CH_2OH$. When x+y+z is different from 0, EO is ethyleneoxy, PO is propyleneneoxy and BO is butyleneoxy. One specific example of amine oxide surfactants is $C_{12-14}$ alkyldimethyl amine oxide.

Suitable cationic surfactants for employment in the compositions described herein may comprise any of the conventional nonionic surfactant types typically employed in liquid detergent products. Cationic surfactants are well known in the art and non-limiting examples of these include quaternary ammonium surfactants, which can have up to 26 carbon atoms. Additional examples include a) alkoxylate quaternary ammonium (AQA) surfactants as discussed in U.S. Pat. No. 6,136,769; b) dimethyl hydroxyethyl quaternary ammonium as discussed in U.S. Pat. No. 6,004,922; c) polyamine cationic surfactants as discussed in WO 98/35002, WO 98/35003, WO 98/35004, WO 98/35005, and WO 98/35006; d) cationic ester surfactants as discussed in U.S. Pat. Nos. 4,228,042, 4,239,660 4,260,529 and U.S. Pat. No. 6,022,844; and e) amino surfactants as discussed in U.S. Pat. No. 6,221,825 and WO 00/47708, specifically amido propyldimethyl amine (APA).

Suitable zwitterionic surfactants for employment in the compositions described herein may comprise any of the conventional zwitterionic surfactant types typically employed in liquid detergent products. Non-limiting examples of zwitterionic surfactants include derivatives of secondary and tertiary amines, derivatives of heterocyclic secondary and tertiary amines, or derivatives of quaternary ammonium, quaternary phosphonium or tertiary sulfonium compounds. See U.S. Pat. No. 3,929,678 for additional examples of zwitterionic surfactants.

Suitable ampholytic surfactants for employment in the compositions described herein may comprise any of the conventional ampholytic surfactant types typically employed in liquid detergent products. Non-limiting examples of ampholytic surfactants include aliphatic derivatives of secondary or tertiary amines, or aliphatic derivatives of heterocyclic secondary and tertiary amines in which the aliphatic radical can be straight- or branched-chain. One of aliphatic substituents comprises at least 8 carbon atoms, typically from 8 to about 18 carbon atoms, and at least one comprises an anionic water-solubilizing group, e.g. carboxy, sulfonate, sulfate. See U.S. Pat. No. 3,929,678 additional for examples of ampholytic surfactants.

In some embodiments of the liquid cleaning compositions described herein, the formulation enabling fraction may include a mixture of LAS, AES, AE, and mixtures thereof. However, it is understood that other embodiments may include different or additional formulation enabling ingredients. In the embodiments that include a formulation enabling fraction comprising the formulation enabling ingredients of LAS, AES, and/or AE, the ratio of LAS:AES and/or AE maybe from 90:10 to 30:70, or from 80:20 to 40:60, or from 70:30 to 55:45. Formulation enabling fractions of LAS:AES and/or AE in such ratios have a Hydrophilic Index of from 4.0 to 10.0, from 5.0 to 9.9, from 5.5 to 8.7, from 5.8 to 7.6, or from 6.0 to 7.0. Accordingly, a formulation enabling fraction comprising such LAS:AES and/or AE ratios may serve to increase the compatibility of the metal bleach catalyst with any sensitive formulation ingredients with compatible HI indexes.

Optional Formulation Deactivating Fraction:

Embodiments of the compositions may include a formulation deactivating fraction which comprises at least one formulation deactivating ingredient. In one embodiment, the compositions comprise from 0.05 to 10 wt %, or from 0.1 to 5.0 wt %, or from 0.5 to 2.0 wt% of a formulation deactivating fraction.

Examples of such deactivation formulation ingredients include, but are not limited to, chelants (*i.e.,* chelators, chelating agents, sequestrants) such as transition metal chelants that include but are not limited to catechol-based chelants, such as mono, bis, and/or tris complexes of 1,2-dihydroxy-3,5-benzenedisulfonate and/or polyamine carboxylate-based chelants, including but not limited to diethylene triamine pentaacetic acid (DTPA) and/or amine-based chelants such as ethylenediamine or diethylenetriamine. The presence of the formulation deactivating fraction may significantly reduce the activity of the MBC, as well as increase the lag time.

In some embodiments, the formulation activation ingredient maybe a catechol moiety selected from the following formula:

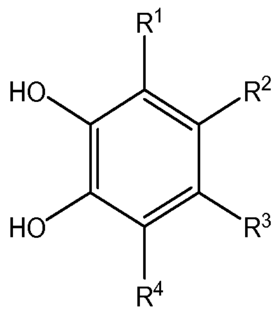

or the deprotonated or partially deprotonated form thereof, wherein $R^1$, $R^2$, $R^3$ and $R^4$ may be independently selected from H, $R^5$, $-SO_3$, COOH, $COOR^6$ and $OR^7$, wherein $R^5$- $R^7$ are independently selected from substituted and substituted, linear or branched C1 - C12 alkyls, alkylenes, alkoxys, aryl, alkaryls, aralkyls, cycloalkyls and heterocyclic rings. In another embodiment, $R^2$ and $R^4$ are H and $R^1$ and $R^3$ are $-SO_3$ groups.

In embodiments of the liquid cleaning compositions detailed herein, the deactivating formulation ingredient may have a CLogP value of from -3.50 to -0.10, from -2.80 to -0.50, or from -2.30 to -1.50. In addition, embodiments of the liquid cleaning compositions detailed herein may include a ratio of deactivating formulation ingredient to metal bleach catalyst from 1000:1 to 1:2, from 250:1 to 2:1, from 100:1 to 5:1, or from 50:1 to 10:1.

Additional Optional Adjunct Materials:

According to specific embodiments, the compositions may further comprise one or more additives or adjuncts. While not essential for the purposes of the present disclosure, the non-limiting list of additives or adjuncts illustrated herein are suitable for use in the various embodiments of the compositions and bleaching methods and maybe desirably incorporated in certain embodiments of the compositions, for example, to assist or enhance performance or to modify the aesthetics of the composition as is the case with perfumes, colorants, dyes or the like. In the present disclosure, the terms "additive" and adjunct" maybe used interchangeably. It is understood that such adjuncts are in addition to the components that were previously listed for any particular embodiment. The total amount of such adjuncts may range from 0.1% to 50% or even from 1% to 30%, by weight of the liquid cleaning composition.

Suitable additives or adjuncts include, but are not limited to, bleach activators, surfactants, builders, chelating agents, dye transfer inhibiting agents, dispersants, enzymes, enzyme stabilizers, catalytic metal complexes, polymeric dispersing agents, clay and soil removal/anti-redeposition agents, brighteners, suds suppressors, dyes, perfumes, perfume delivery systems, structure elasticizing agents, fabric softeners, carriers, hydrotropes, solvents, processing aids, and pigments, as described herein.

The precise nature of these additional components, and levels of incorporation thereof, will depend on the physical form of the fabric care composition and the nature of the operation for which it is to be used. Suitable additive and adjunct materials include, but are not limited to, polymers, for example cationic polymers, surfactants, builders, chelating agents, dye transfer inhibiting agents, dispersants, enzymes, and enzyme stabilizers, catalytic materials, bleach activators, polymeric dispersing agents, clay soil removal/anti-redeposition agents, brighteners, suds suppressors, dyes, additional perfume and perfume delivery systems, structure elasticizing agents, fabric softeners, carriers, hydrotropes, processing aids and/or pigments. In addition to the disclosure below, suitable examples of such other adjuncts and levels of use are found in U.S. Patent Nos. 5,576,282; 6,306,812; and 6,326,348.

As stated, the adjunct ingredients are not essential to the fabric care compositions. Thus, certain embodiments

of the compositions do not contain one or more of the following adjuncts materials: bleach activators, surfactants, builders, chelating agents, dye transfer inhibiting agents, dispersants, enzymes, and enzyme stabilizers, catalytic metal complexes, polymeric dispersing agents, clay and soil removal/anti-redeposition agents, brighteners, suds suppressors, dyes, additional perfumes and perfume delivery systems, structure elasticizing agents, fabric softeners, carriers, hydrotropes, processing aids and/or pigments. However, when one or more adjuncts are present, such one or more adjuncts may be present as detailed below.

Detergent compositions may also contain bleaching agents. Suitable bleaching agents include, for example, hydrogen peroxide sources, such as those described in detail in Kirk Othmer's Encyclopedia of Chemical Technology, 4th Ed (1992, John Wiley & Sons), Vol. 4, pp. 271-300 "Bleaching Agents (Survey)."

Organic Peroxides, especially Diacyl Peroxides - Types of organic peroxides that may be suitable for the compositions and methods disclosed herein are extensively illustrated in Kirk Othmer, Encyclopedia of Chemical Technology, Vol. 17, John Wiley and Sons, 1982 at pages 27-90 and especially at pages 63-72. Other such bleaching agents include hydroperoxide, diacyl peroxide, dialkyl peroxides, peroxycarbonates, peroxydicarbonate, peroxyester, peroxyketals, cyclic peroxides, and mixture thereof. If a diacyl peroxide is used in the compositions detailed herein, it will preferably be one which exerts minimal adverse impact on fabric care, including color care.

Metal-Containing Bleach Catalysts - The compositions and methods of detailed herein can also optionally include metal-containing bleach catalysts, preferably manganese, iron and cobalt-containing bleach catalysts.

Bleach Boosting Compounds - The compositions herein may comprise one or more bleach boosting compounds. Bleach boosting compounds provide increased bleaching effectiveness in lower temperature applications. The bleach boosters act in conjunction with conventional peroxygen bleaching sources to provide increased bleaching effectiveness. This is normally accomplished through in situ formation of an active oxygen transfer agent such as a dioxirane, an oxaziridine, or an oxaziridinium. Alternatively, preformed dioxiranes, oxaziridines and oxaziridiniums may be used.

Peroxygen sources are well-known in the art and the peroxygen source employed in the present invention may comprise any of these well known sources, including peroxygen compounds as well as compounds, which under consumer use conditions, provide an effective amount of peroxygen in situ. The peroxygen source may include a hydrogen peroxide source, the in situ formation of a peracid anion through the reaction of a hydrogen peroxide source and a bleach activator, preformed peracid compounds or mixtures of suitable peroxygen sources. Of course, one of ordinary skill in the art will recognize that other sources of peroxygen may be employed without departing from the scope of the invention. The bleach boosting compounds, when present, are preferably employed in conjunction with a peroxygen source in the bleaching systems of the present invention.

Preformed Peracids - Also suitable as bleaching agents are preformed peracids. The preformed peracid compound s suitable for use herein are any convenient compound which is stable and which under consumer use conditions provides an effective amount of peracid or peracid anion. The preformed peracid compound may be selected from the group consisting of percarboxylic acids and salts, percarbonic acids and salts, perimidic acids and salts, peroxymonosulfuric acids and salts, and mixtures thereof. Examples of these compounds are described in U.S. Patent No. 5,576,282 to Miracle et al.

One class of suitable organic peroxycarboxylic acids has the general formula:

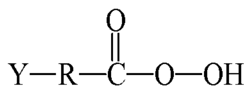

wherein R is an alkylene or substituted alkylene group containing from 1 to 22 carbon atoms or a phenylene or substituted phenylene group, and Y is hydrogen, halogen, alkyl, aryl, -C(O)OH or - C(O)OOH.

Organic peroxyacids suitable for use in the compositions and methods detailed herein can contain either one or two peroxy groups and can be either aliphatic or aromatic. When the organic peroxycarboxylic acid is aliphatic, the unsubstituted peracid has the general formula:

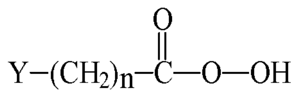

wherein Y can be, for example, H, $CH_3$, $CH_2Cl$, C(O)OH, or C(O)OOH; and n is an integer from 0 to 20. When the organic peroxycarboxylic acid is aromatic, the unsubstituted peracid has the general formula:

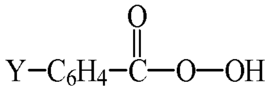

wherein Y can be, for example, hydrogen, alkyl, alkylhalogen, halogen, C(O)OH or C(O)OOH.

Typical monoperoxy acids that are suitable for the compositions and methods detailed herein include alkyl and aryl peroxyacids such as:

(i) peroxybenzoic acid and ring-substituted peroxybenzoic acid, e.g. peroxy-a-naphthoic acid, monoperoxyphthalic acid (magnesium salt hexahydrate), and *o*-carboxybenzamidoperoxyhexanoic acid (sodium salt);
(ii) aliphatic, substituted aliphatic and arylalkyl monoperoxy acids, e.g. peroxylauric acid, peroxystearic acid, N-nonanoylaminoperoxycaproic acid (NAPCA), N,N-(3-octylsuccinoyl)aminoperoxycaproic acid (SAPA) and N,N-phthaloylaminoperoxycaproic acid (PAP); and
(iii) amidoperoxyacids, e.g. monononylamide of either peroxysuccinic acid (NAPSA) or of peroxyadipic acid (NAPAA).

Such bleaching agents are disclosed in U.S. Patent Nos. 4,483,781 to Hartman and 4,634,551 to Burns et al.; European Patent Application 0,133,354 to Banks et al.; and U.S. Patent No. 4,412,934 to Chung et al. Sources also include 6-nonylamino-6-oxoperoxycaproic acid as described in U.S. Patent No. 4,634,551 to Burns et al. Persulfate compounds such as for example OXONE®, manufactured commercially by E.I. DuPont de Nemours of Wilmington, DE can also be employed as a suitable source of peroxymonosulfuric acid. PAP is disclosed in, for example, U.S. Patent Nos. 5,487,818; 5,310,934; 5,246,620; 5,279,757 and 5,132,431.

Photobleaches - Suitable photobleaches for use in the treating compositions of the present invention include, but are not limited to, the photobleaches described in U.S. Patent Nos. 4,217,105 and 5,916,481.

Enzyme Bleaching - Enzymatic systems may be used as bleaching agents. The hydrogen peroxide may also be present by adding an enzymatic system (i.e. an enzyme and a substrate therefore) which is capable of generating hydrogen peroxide at the beginning or during the washing and/or rinsing process. Such enzymatic systems are disclosed in EP Patent Application 91202655.6 filed October 9, 1991.

The compositions and methods detailed herein may utilize alternative bleach systems such as ozone, chlorine dioxide and the like. Bleaching with ozone may be accomplished by introducing ozone-containing gas having ozone content from 20 to 300 g/$m^3$ into the solution that is to contact the fabrics. The gas:liquid ratio in the solution should be maintained from 1:2.5 to 1:6. U.S. Patent No. 5,346, 588 describes a suitable process for the utilization of ozone as an alternative to conventional bleach systems.

Builders - The compositions and methods detailed herein can comprise one or more detergent builders or builder systems. When present, the compositions will typically comprise at least 1% builder, or from 5% or 10% to 80%, 50%, or even 30% by weight, of said builder. Builders include, but are not limited to, the alkali metal, ammonium and alkanolammonium salts of polyphosphates, alkali metal silicates, alkaline earth and alkali metal carbonates, aluminosilicate builders polycarboxylate compounds, ether hydroxypolycarboxylates, copolymers of maleic anhydride with ethylene or vinyl methyl ether, 1,3,5-trihydroxybenzene-2,4,6-trisulphonic acid, and carboxymethyl-oxysuccinic acid, the various alkali metal, ammonium and substituted ammonium salts of polyacetic acids such as ethylenediamine tetraacetic acid and nitrilotriacetic acid, as well as polycarboxylates such as mellitic acid, succinic acid, oxydisuccinic acid, polymaleic acid, benzene 1,3,5-tricarboxylic acid, carboxymethyloxysuccinic acid, and soluble salts thereof.

Chelating Agents - The compositions herein may also optionally contain one or more copper, iron and/or manganese chelating agents. If utilized, chelating agents will generally comprise from 0.1% by weight of the compositions herein to 15%, or even from 3.0% to 15% by weight of the compositions herein. Suitable chelants are selected from: diethylene triamine pentaacetate, diethylene triamine penta(methyl phosphonic acid), ethylene diamine-N'N'-disuccinic acid, ethylene diamine tetraacetate, ethylene diamine tetra(methylene phosphonic acid) and hydroxyethane di(methylene phosphonic acid). A preferred chelant is ethylene diamine-N'N'-disuccinic acid (EDDS) and/or hydroxyethane diphosphonic acid (HEDP). An embodiment of a laundry detergent composition preferably comprises ethylene diamine-N'N'-disuccinic acid or salt thereof. Preferably the ethylene diamine-N'N'-disuccinic acid is in S,S enantiomeric form, more preferably comprises 4,5-dihydroxy-m-benzenedisulfonic acid disodium salt. Preferred chelants are also calcium crystal growth inhibitors.

Dye Transfer Inhibiting Agents - The compositions and methods detailed herein may also include one or more dye transfer inhibiting agents. Suitable polymeric dye transfer inhibiting agents include, but are not limited to, polyvinylpyrrolidone polymers, polyamine N-oxide polymers, copolymers ofN-vinylpyrrolidone and N-vinylimidazole, polyvinyloxazolidones and polyvinylimidazoles or mixtures thereof. When present in the compositions herein, the dye transfer inhibiting agents are present at levels from 0.0001%, from 0.01%, from 0.05% by weight of the cleaning compositions to 10%, 2%, or even 1% by weight of the cleaning compositions.

Dispersants - The compositions and methods detailed herein can also contain dispersants. Suitable water-soluble organic materials are the homo- or co-polymeric acids or their salts, in which the polycarboxylic acid may comprise at least two carboxyl radicals separated from each other by not more than two carbon atoms.

Enzymes - The compositions and methods detailed herein can comprise one or more detergent enzymes which provide cleaning performance and/or fabric care benefits. Examples of suitable enzymes include, but are not limited to,

hemicellulases, peroxidases, proteases, cellulases, xylanases, lipases, phospholipases, esterases, cutinases, pectinases, keratanases, reductases, oxidases, phenoloxidases, lipoxygenases, ligninases, pullulanases, tannases, pentosanases, malanases, β-glucanases, arabinosidases, hyaluronidase, chondroitinase, laccase, and amylases, or mixtures thereof. A typical combination is a cocktail of conventional applicable enzymes like protease, lipase, cutinase and/or cellulase in conjunction with amylase.

Enzyme Stabilizers - Enzymes suitable for use in the compositions and methods detailed herein (e.g., detergents) can be stabilized by various techniques. The enzymes employed herein can be stabilized by the presence of water-soluble sources of calcium and/or magnesium ions in the finished compositions that provide such ions to the enzymes.

Methods of Bleaching:

The compositions disclosed in this application may be used to bleach, clean or treat an oxidizable substrate (*e.g.*, soluble or insoluble chemical compound, fabric, dishes, hard surfaces, countertops, dentures and the like). Typically at least a portion of the oxidizable substrate is contacted with an embodiment of the aforementioned composition, in neat form or diluted in a liquor, for example, a wash liquor and then the article may be optionally washed and/or rinsed. In one embodiment, a fabric article may be contacted with an embodiment of the aforementioned composition and then optionally washed and/or rinsed. For purposes of the present disclosure, washing includes, but is not limited to, scrubbing, and mechanical agitation. In methods of cleaning fabric, the fabric may comprise most any fabric capable of being laundered or treated.

In certain embodiments, the compositions disclosed in the present specification can be used to form aqueous washing solutions for use in the laundering of fabrics. Generally, an effective amount of such composition is added to water, preferably in a conventional fabric laundering automatic washing machine, to form an aqueous laundering solution. The aqueous laundering solution is then contacted, preferably under agitation, with one or more fabrics to be laundered. The compositions according to the present application may be used in various types of washing machines and processes, including, but not limited to, top loading washing machines, front loading washing machines, Miele type washing machines, commercial washing machines, industrial washing machines, and hand washing processes.

In one aspect, the compositions may be employed as a laundry additive, a pre-treatment composition and/or a post-treatment composition. For example, in certain embodiments, the composition may be in the form of a spray which is sprayed on a surface of the fabric. In other embodiments, the composition may be in the form of a soak or rinse composition, such as a pre- or post-laundering soak or rinse composition. In these embodiments, the fabric to be treated may be soaked or rinsed in the composition to impart the enhanced cleaning characteristics.

The compositions can be diluted under different treatment conditions associated with the particular type of care composition. Under some conditions, the composition may be used in undiluted form, such as in a laundry pre-treat composition, or such compositions can be slightly diluted. In through the wash type conditions, different amounts of dilution are achieved based on type of washing machine, global consumer preferences, and the like. For such through the wash conditions, preferred concentrations of metal bleach catalyst present in the diluted composition range from 0.000001 to 10,000 ppm, or from 0.00001 to 1000 ppm, or from 0.0001 to 100ppm, or from 0.001 to 25 ppm, or from 0.01 to 5 ppm, or from 0.1 to 1.0 ppm.

While various specific embodiments have been described in detail herein, the present disclosure is intended to cover various different combinations of the disclosed embodiments and is not limited to those specific embodiments described herein. The various embodiments of the present disclosure maybe better understood when read in conjunction with the following representative examples. The following representative examples are included for purposes of illustration and not limitation.

Test Methods

Bleach Lag Time Protocol I: The following chemicals are utilized in the protocol, or are employed to prepare the stock solutions that are utilized in the protocol:

Chemicals:

1. Oxidizable Substrate: Tropaeolin-O dye; obtained from Aldrich Chemical Company; CAS# [547-57-9]; 65% active
2. Primary Oxidant: tert-butyl hydroperoxide; obtained from Aldrich Chemical Company; CAS# [75-91-2]; 70% active
3. Bleaching Primer: peracetic acid - 32 wt% solution in dilute acetic acid; obtained from Sigma-Aldrich; Catalog# [269336]

4. Metal Bleach Catalyst (MBC): one or more bleach metal catalysts; >99% active
5. Chelant: DTPA (Trilon® C Liquid); obtained from BASF; 40% active
6. Sodium Carbonate Anhydrous: obtained from EMD Chemicals; CAS# [497-19-8]; 100% active
7. AES Solution: C10-C18 alkyl ethoxy sulfate supplied by Shell Chemicals, Houston TX; 1.0% active

Stock Solution Preparations:

1. Oxidizable Substrate Solution: To prepare a 0.065% Tropaeolin-O solution, place 0.10g of Tropaeolin-O powder into a 100mL volumetric flask and fill to volume with deionized water.
2. Chelant Solution: To prepare a 2.0% DTPA Solution, place 5.0 mL of 40% DTPA solution into a 100mL volumetric flask and fill to volume with deionized water.
3. Base Testing Solution: To prepare a 240ppm Sodium Carbonate / 10ppm DTPA solution - Place 0.48g of Sodium Carbonate Anhydrous powder into a 2000mL volumetric flask, add 1mL of the Chelant Solution and fill to volume with deionized water.
4. Metal Bleach Catalyst Solution: A 3.0 millimolar solution of the MBC is prepared in deionized water.

Protocol Steps:

A) A jacketed, glass reaction beaker (1000mL Kontes®) is placed onto a mechanical stir plate. A stir bar is placed in the beaker and stirring is initiated to achieve approximately 1 revolution per second. The beaker is connected to a water circulator and the water temperature is set to 22.0°C. 500 mL of the base testing solution is added to the beaker.
B) 8.0 mL of the AES solution is added to the base testing solution. Using a standard pH probe, the pH of the testing solution is adjusted to pH 8.05 (±0.05) with 1.0N NaOH or HCl solutions. The testing solution is allowed to reach the specified test temperature of approximately 22.0°C before progressing to Step C.
C) 0.15 mL of the Primary Oxidant is added to the testing solution, and then 12.0 mL of a freshly prepared MBC Solution is immediately added to the testing solution.
D) Immediately after Step C, 3.95 mL of the Oxidizable Substrate is added to the testing solution. Immediately following the addition of the Oxidizable Substrate, a 1.0 mL aliquot of the testing solution is removed and placed into a UV-VIS cuvette as a control. The UV-Visible absorbance of the testing solution @430 nm is immediately measured with a UV-Visible spectrometer (Beckman Coulter DU® 800). Additional 1.0 mL aliquots of the testing solution are taken every 1 to 2 minutes, and the UV-Visible absorbance is immediately measured. The UV-Visible absorbance measurements may be taken at longer intervals if minimal absorption drop is observed (suggesting minimal bleaching of the oxidizable substrate), or shorter intervals if rapid loss in absorbance is observed (suggesting fast bleaching of oxidizable substrate). The UV-Visible absorbance measurements are taken until the absorbance drops to about 15% of the original absorbance value. Fresh aliquots of the testing solution are drawn as frequently as needed to minimize temperature changes in the cuvette solution.
E) The UV-Visible absorbance measurements are then plotted versus time to determine and/or calculate an initial bleaching period, secondary bleaching period and LTR value.
F) Steps A-D are repeated, except the Bleaching Primer is also added to the testing solution at the same time as the Primary Oxidant, and the Bleaching Primer is added in an amount which is the same molar quantity (*i.e.,* 1.0 equivalent) as the MBC.
G) The UV-Visible absorbance measurements are then plotted versus time to determine and/or calculate initial bleaching periods, secondary bleaching periods, LTR values and LTRI values.

Bleach Lag Time Protocol II: The same chemicals and stock solutions as in Bleach Lag Time Protocol I are used except where noted.

Chemicals:

1. Bleaching Primer A: peracetic acid - 32 wt% solution in dilute acetic acid; obtained from Sigma-Aldrich; Catalog# [269336]
2. Bleaching Primer B: Laurox® W-40 (dilauroyl peroxide, 40% suspension in water) from Akzo

3. Bleaching Primer C: Perkadox® L-W35 USP grade (dibenzoyl peroxide, 35% water based suspension) from Akzo
4. Lipase enzyme: Lipex 100L from Novozymes; activity = 18.6mg EP/g

Stock Solution Preparations:

1. LAS: Obtained a 97% C11.8 LAS material from P&G Chemicals. Using 50% NaOH solution, obtained from VWR, and deionized water - neutralized the LAS solution until pH~7.55 and 22.13% activity.
2. Surfactant Solution (1.0% LAS): Added 9.04g of 22.13% LAS solution to a 200mL volumetric flask and filled to volume with deionized water.
3. Surfactant Solution (1.0% AES): Obtained a 69.2% NaC12-14 AE1S material from Huntsman. Added 2.89g of 69.2% AES to a 200mL volumetric flask and filled to volume with deionized water.
4. Surfactant Solution with Bleaching Primer: Mix 1.0% AES surfactant solution with Bleaching Primer just prior to use.

Protocol Steps:

A) A jacketed, glass reaction beaker (1000 mL Kontes®) is placed onto a mechanical stir plate. A stir bar is placed in the beaker and stirring is initiated to achieve approximately 1 revolution per second. The beaker is connected to a water circulator and the water temperature is set to 36 °C. 500 mL of the Base Testing Solution is added to the beaker.
B) 3.95 mL of the Oxidizable Substrate is added to the testing solution. Using a standard pH probe, the pH of the testing solution is adjusted to pH 8.05 (±0.05) with 1.0 N NaOH or HCl solutions.
C) 8.0 mL of the Surfactant Solution (1.0% AES) is added to the base testing solution. The testing solution is allowed to reach the specified test temperature of approximately 36 °C before progressing to the next step.
D) 1.0 mL aliquot of the Testing Solution is removed and placed into a UV-VIS cuvette as a control. The UV-Visible absorbance of the testing solution @430 nm is immediately measured with a UV-Visible spectrometer (Beckman Coulter DU® 800).
E) 0.15 mL of the Primary Oxidant is added to the Testing Solution.
F) 1.20 mL of a freshly prepared MBC Solution is added to the Testing Solution.
G) Additional 1.0 mL aliquots of the Testing Solution are taken every 1 to 2 minutes, and the UV-Visible absorbance is immediately measured. The UV-Visible absorbance measurements may be taken at longer intervals if minimal absorption drop is observed (suggesting minimal bleaching of the oxidizable substrate), or shorter intervals if rapid loss in absorbance is observed (suggesting fast bleaching of oxidizable substrate). The UV-Visible absorbance measurements are taken until the absorbance drops to about 15% of the original absorbance value. Fresh aliquots of the Testing Solution are drawn as frequently as needed to minimize temperature changes in the cuvette solution.
H) The UV-Visible absorbance measurements are then plotted versus time to determine and/or calculate an initial bleaching period, secondary bleaching period and LTR value.
I) Steps A-H are repeated, except the "Surfactant Solution with Bleaching Primer" (freshly prepared) is used in place of the Surfactant Solution. [The Bleaching Primer is used in an amount equivalent in molar quantity (*i.e.,* 1.0 equivalent) as the MBC].
J) Steps A-I are repeated, except that Lipase enzyme is also added to the testing solution immediately following the addition of the Primary Oxidant for test legs specifying Lipase addition. 26.9 mg of Lipase solution is weighed onto small weighing dish. The weighing dish and contents are added together to the Testing Solution to allow dissolution.
K) The UV-Visible absorbance measurements are then plotted versus time to determine and/or calculate initial bleaching periods, secondary bleaching periods, LTR values and LTRI values.

SRI Protocol:

Stain Preparation & Conditioning:

Obtain stain set of 5x5x2 cotton fabric articles (CW 120) from Empirical Manufacturing Company according to preparation standard operating procedure (SOP) for Taco Grease. The stained fabric articles must be greater than 5 days old (from application of stain) and less than 1 month old. The stained fabric articles are allowed to equilibrate to room temperature for about 8 hours.

Washing machine set-up and Pre-treat directions:

1. Use mini-washing machines (7,57 lt. (2 gallon) capacity washing machines in banks of 5). Fill the mini-washers with 7,57 lt. (2 gallon) of water (32.2° C (90 °F), 6gpg hardness).
2. Set agitation time to 2 minutes with a 1 minute drain time.
3. Using syringe, apply 1.0 mL of pre-treatment composition directly to stains on the fabric articles, leaving undisturbed for 5 minutes.

Rinse directions:

1. At the end of 5 minutes, to the mini-washers add two 10"x10" poly cotton 50/50 (PCW50/50) swatches and the stained fabric articles pretreated with the compositions (2 fabric articles per washer)
2. Run 2 minute agitation and 1 minute drain.
3. At end of drain, immediately remove the stained fabric articles and swatches.
4. Immediately dry the stained fabric articles using Maytag dryers (or equivalent) at high heat setting for 30 minutes.

Stain Release Index (SRI) Measurement:

Within one hour of completion of the dry cycle, use an image analyzer (operation and maintenance details below) to measure the change in SRI for each pre-treated, washed and dried stained fabric article versus an unwashed stained fabric article. The SRI is measured using a modified version of the "Standard Guide for Evaluating Stain Removal Performance in Home Laundering" (ASTM D4265-98). The modifications include the following. 4 external replicates and at least 2 internal replicates per mini washers are tested. The stain is applied by placing the fabric on a flat surface and applying the stain using a pipette for liquids or a brush for solids with a predetermined amount each time. The stains tested are supplied by EMC Empirical Manufacturing Company (as described above).

Results

The following tables illustrate that the laundry additive compositions and methods described herein perform by decreasing the concentration of an oxidizable substrate (dye chromophores) in the wash solution. In the following example, the conditions are modified from the Bleaching Lag Time Protocol I, including but not limited to, having alternative surfactants, different selection and level of bleaching primer, etc. Nevertheless, the examples clearly show the reduction in $t_1$ value due to the use of bleaching primer and Lipase enzyme.

**Table C: Bleaching Lag Time Reduction Index**

| Ingredient (ppm in test solution) | A | B | C | D | E |
|---|---|---|---|---|---|
| AES[11] | 46 | 46 | 46 | 46 | 46 |
| HLAS[12] | 115 | 115 | 115 | 115 | 115 |
| Zwitterionic ethoxylated quaternized sulfated hexamethylene diamine[13] | 9.2 | 9.2 | 9.2 | 9.2 | 9.2 |
| DTPA: Diethylene triamine pentaacetic acid | 21.5 | 21.5 | 21.5 | 21.5 | 21.5 |
| 4,5-Dihydroxy-1,3-benzenedisulfonic acid disodium salt | 11.5 | 11.5 | - | - | - |
| 1,2-propandiol | 92 | 92 | 92 | 92 | 92 |
| MBC-2 | 24 | 24 | 2.4 | 2.4 | 2.4 |
| Bleaching Primer: dilauroyl peroxide | - | 0.55 | - | 0.0138 | 0.0138 |
| Lipolex | - | 1 | - | - | 3 |
| Primary Bleach: t-butyl hydroperoxide | 210 | 210 | 210 | 210 | 210 |
| Brightener 49 | 0.92 | 0.92 | 0.92 | 0.92 | 0.92 |

(continued)

| Ingredient (ppm in test solution) | A | B | C | D | E |
|---|---|---|---|---|---|
| $t_1$ value | 260 min | | 17 min | | |
| $t_2$ value | 3 min | | 5 min | | |
| LTR | 120 | | 3.4 | | |
| $t_{1BP}$ value | | 150 min | | 14.5 min | 12.5 min |
| LTRI | | 73% (vs. A) | | 21% (vs. C) | 36% (vs. C) |
| | | | | | |
| % bleaching in solution after 12 minutes at 32 C | | | 10% | 20% | 44% |

The above MBC-containing composition was tested without a priming system (Example C) and compared to a composition that also contains a bleaching primer (dilauroyl peroxide), Example D, and a composition that contains a bleaching primer (dilauroyl peroxide) and Lipase (Lipolex), Example E. The use of DAP and Lipase together with the MBC reduces the bleaching lag time as shown in Table C as is represented by the Lag Time Reduction Index.

The following table includes additional examples of LTR (Lag Time Reduction) values for metal bleach catalysts that are suitable for employment in the compositions and methods detailed in this application.

**Table D: Exemplary LTR Value Table**

| $t_1$ value | $t_2$ value | LTR | $t_{1BP}$ value | LTRI |
|---|---|---|---|---|
| 40 min | 5 min | 8.0 | 10 min | 300% |
| 10 min | 5 min | 2.0 | 7 min | 43% |

In addition, for metal bleach catalysts in which the value of $t_1$ is not reached within 8 hours, the temperature of the Lag Time Protocol I maybe increase to 36°C.

The following table includes additional examples of $\mathbf{t_{1BP}}$ values for metal bleach catalysts that are suitable for employment in the compositions and methods detailed in this application.

**Table E: Exemplary $t_{1BP}$ Value Table**

| Surfactant | Tiron | Nil Tiron |
|---|---|---|
| 100% AES | 45 min | 2.2 min |
| 50% AES + 50% LAS | 10 min | 2.0 min |
| 100% LAS | 5 min | 2.0 min |

Further, the following table illustrates that a laundry pre-treatment version of the compositions and methods described herein increases consumer perceivable stain reduction on fabric articles that come directly out of a dryer (Stain Release Index measurements taken within one hour from fabric articles being dried). In this example, fabric articles stained with taco grease were pre-treated with bleach metal catalyst containing compositions, washed and dried. The SRI Protocol (defined herein) was followed for the process of washing and drying the stained fabric articles.

**Table F: SRI Testing for Exemplary Compositions**

| Ingredient | 1 | 2 | 3 | 4 |
|---|---|---|---|---|
| AES[11] | 10.0 | 10.0 | 10.0 | 10.0 |
| LAS[12] | 25.0 | 25.0 | 25.0 | 25.0 |

(continued)

| Ingredient | 1 | 2 | 3 | 4 |
|---|---|---|---|---|
| Zwitterionic ethoxylated quaternized sulfated hexamethylene diamine[13] | 2.0 | 2.0 | 2.0 | 2.0 |
| DTPA: Diethylene triamine pentaacetic acid | 2.5 | 2.5 | 2.5 | 2.5 |
| 4,5-Dihydroxy-1,3-benzenedisulfonic acid disodium salt | 2.5 | 2.5 | 2.5 | 2.5 |
| 1,2-propandiol | 20.0 | 20.0 | 20.0 | 20.0 |
| MBC = 5,12-diethyl-1,5,8,12-tetraaza-bicyclo[6.6.2]hexadecane manganese (II) chloride | - | - | 0.05 | 0.05 |
| Bleaching Primer: dilauroyl peroxide | - | 0.062 | - | 0.062 |
| Brightener 49 | 0.20 | 0.20 | 0.20 | 0.20 |
| water, other optional agents/components* | to 100% balance | to 100% balance | to 100% balance | to 100% balance |
| pH adjusted with NaOH to: | 5 | 5 | 5 | 5 |
| **Change in SRI Value** | **0** | **-1** | **+8** | **+18** |

[11] AES = $C_{10}$-$C_{18}$ alkyl ethoxy sulfate supplied by Shell Chemicals.
[12] LAS = $C_9$-$C_{15}$ linear alkyl benzene sulfonate supplied by Huntsman Corp
[13] Soil Anti-Redeposition Agent = Zwitterionic ethoxylated quaternized sulfated hexamethylene diamine available under the tradename LUTENSIT® from BASF (Ludwigshafen, Germany) and such as those described in WO 01/05874
* Other optional agents/components include suds suppressors, structuring agents like NaSWT (Hydrogenated Castor Oil, Anionic Premix), Mica pearlescent aesthetic enhancer

## EXAMPLES

Below are examples of compositions which include at least one metal bleach catalyst and bleaching primer.

**Liquid Detergent Formulations:** Tables 1 and 2 provide examples of liquid detergent compositions which include at least one metal bleach catalyst and a bleaching primer. The ingredients detailed in Tables 1 and 2 are in weight percentages of the total composition.

**Table 1 - Liquid Detergent Formulations**

| Ingredient | A | B | C | D | E | F[5] |
|---|---|---|---|---|---|---|
| sodium alkyl ether sulfate | 14.4% | 14.4% | - | 9.2% | 5.4% | - |
| linear alkylbenzene sulfonic acid | 4.4% | 4.4% | 12.2% | 5.7% | 1.3% | 22.0% |
| alkyl ethoxylate | 2.2% | 2.2% | 8.8% | 8.1% | 3.4% | 18.0% |
| amine oxide | 0.7% | 0.7% | 1.5% | - | - | - |
| citric acid | 2.0% | 2.0% | 3.4% | 1.9% | 1.0% | 1.6% |
| fatty acid | 3.0% | 3.0% | 8.3% | - | - | 16.0% |
| protease | 1.0% | 1.0% | 0.7% | 1.0% | - | 2.5% |
| amylase | 0.2% | 0.2% | 0.2% | - | - | 0.3% |
| lipase | - | - | - | 0.2% | - | - |
| borax | 1.5% | 1.5% | 2.4% | 2.9% | - | - |
| calcium and sodium formate | 0.2% | 0.2% | - | - | - | - |
| formic acid | - | - | - | - | - | 1.1% |
| amine ethoxylate polymers | 1.8% | 1.8% | 2.1% | - | - | 3.2% |
| sodium polyacrylate | - | - | - | - | 0.2% | - |

(continued)

| Ingredient | A | B | C | D | E | F[5] |
|---|---|---|---|---|---|---|
| sodium polyacrylate copolymer | - | - | - | 0.6% | - | - |
| DTPA[1] | 0.1% | 0.1% | - | - | - | 0.9% |
| DTPMP[2] | - | - | 0.3% | - | - | - |
| EDTA[3] | - | - | - | - | 0.1% | - |
| fluorescent whitening agent | 0.15% | 0.15% | 0.2% | 0.12% | 0.12% | 0.2% |
| ethanol | 2.5% | 2.5% | 1.4% | 1.5% | - | - |
| propanediol | 6.6% | 6.6% | 4.9% | 4.0% | - | 15.7% |
| sorbitol | - | - | - | 4.0% | - | |
| ethanolamine | 1.5% | 1.5% | 0.8% | 0.1% | | 11.0% |
| sodium hydroxide | 3.0% | 3.0% | 4.9% | 1.9% | 1.0% | - |
| sodium cumene sulfonate | - | - | 2.0% | - | - | - |
| silicone suds suppressor | - | - | 0.01% | - | - | - |
| perfume | 0.3% | 0.3% | 0.7% | 0.3% | 0.4% | 0.6% |
| MBC-1 | 0.03 | - | - | - | - | - |
| MBC-2 | - | 0.05 | - | - | 0.13 | 0.03 |
| MBC-3 | - | - | 0.19 | - | - | - |
| MBC-4 | - | - | - | 0.04 | - | - |
| Bleaching Primer: peracetic acid | - | - | - | - | 0.002 | - |
| Bleaching Primer: dilauroyl peroxide | 0.03 | 0.003 | - | 0.01 | 0.04 | - |
| Bleaching Primer: PAP | - | - | 0.09 | - | - | 0.009 |
| Primary Oxidant: tert-butyl hydroperoxide | - | - | - | - | - | 0.27 |
| water | balance | balance | balance | balance | balance | balance |
| TOTAL | 100.0% | 100.0% | 100.0% | 100.0% | 100.0% | 100.0% |

**Table 2 - Liquid Detergent Formulations**

| Ingredient | G | H | I | J | K | L[6] |
|---|---|---|---|---|---|---|
| | | | | | | |
| sodium alkyl ether sulfate | 14.4% | 14.4% | - | 9.2% | 5.4% | - |
| linear alkylbenzene sulfonic acid | 4.4% | 4.4% | 12.2% | 5.7% | 1.3% | 22.0% |
| alkyl ethoxylate | 2.2% | 2.2% | 8.8% | 8.1% | 3.4% | 18.0% |
| amine oxide | 0.7% | 0.7% | 1.5% | - | - | - |
| citric acid | 2.0% | 2.0% | 3.4% | 1.9% | 1.0% | 1.6% |
| fatty acid | 3.0% | 3.0% | 8.3% | - | - | 16.0% |
| protease | 1.0% | 1.0% | 0.7% | 1.0% | - | 1.7% |
| amylase | 0.2% | 0.2% | 0.2% | - | - | 0.6% |
| lipase | - | - | - | 0.2% | - | 0.2% |
| borax | 1.5% | 1.5% | 2.4% | 2.9% | - | - |

(continued)

| Ingredient | G | H | I | J | K | L[6] |
|---|---|---|---|---|---|---|
| calcium and sodium formate | 0.2% | 0.2% | - | - | - | - |
| formic acid | - | - | - | - | - | 1.1% |
| amine ethoxylate polymers | 1.8% | 1.8% | 2.1% | - | - | 3.2% |
| sodium polyacrylate | - | - | - | - | 0.2% | - |
| sodium polyacrylate copolymer | - | - | - | 0.6% | - | - |
| DTPA[1] | 0.1% | 0.1% | - | - | - | 0.9% |
| DTPMP[2] | - | - | 0.3% | - | - | - |
| EDTA[3] | - | - | - | - | 0.1% | - |
| fluorescent whitening agent | 0.15% | 0.15% | 0.2% | 0.12% | 0.12% | 0.2% |
| ethanol | 2.5% | 2.5% | 1.4% | 1.5% | - | - |
| propanediol | 6.6% | 6.6% | 4.9% | 4.0% | - | 15.7% |
| sorbitol | - | - |  | 4.0% | - | - |
| ethanolamine | 1.5% | 1.5% | 0.8% | 0.1% | - | 11.0% |
| sodium hydroxide | 3.0% | 3.0% | 4.9% | 1.9% | 1.0% | - |
| sodium cumene sulfonate | - | - | 2.0% | - | - | - |
| silicone suds suppressor | - | - | 0.01% | - | - | - |
| perfume | 0.3% | 0.3% | 0.7% | 0.3% | 0.4% | 0.6% |
| MBC-5 | 0.03 | - | - | - | - | - |
| MBC-6 | - | 0.05 | - | - | 0.13 | 0.03 |
| MBC-7 | - | - | 0.19 | - | - | - |
| MBC-8 | - | - | - | 0.04 | - | - |
| Bleaching Primer: peracetic acid | - | - | - | - | 0.002 | - |
| Bleaching Primer: dilauroyl peroxide | 0.03 | 0.003 | - | 0.01 | 0.04 | - |
| Bleaching Primer: PAP | - | - | 0.09 | - | - | 0.009 |
| Primary Oxidant: tert-butyl hydroperoxide | - | - | - | - | - | 0.27 |
| opacifier[9] |  | 0.5% |  |  |  |  |
| water | balance | balance | balance | balance | balance | balance |
| TOTAL | 100% | 100% | 100% | 100% | 100% | 100% |

Footnotes for the compositions of A-L in Tables 1 and 2: [1] diethylenetriaminepentaacetic acid, sodium salt
[2] diethylenetriaminepentakismethylenephosphonic acid, sodium salt
[3] ethylenediaminetetraacetic acid, sodium salt
[5] compact formula, packaged as a unitized dose in polyvinyl alcohol film
[6] alkoxylate anthraquinone colorant with hueing efficiency >10 and wash removability 30-85%
[9] Acusol OP301

**Granular Detergent Formulations:** Table 3 provides examples of granular detergent compositions which include at least one metal bleach catalyst and a bleaching primer. The ingredients detailed in Table 3 are in weight percentages of the total composition.

**Table 3 - Granular Detergent Formulations**

| Ingredient | A | B | C | D | E |
|---|---|---|---|---|---|
| Na linear alkylbenzene sulfonate | 3.4% | 3.3% | 11.0% | 3.4% | 3.3% |
| Na alkylsulfate | 4.0% | 4.1% | | 4.0% | 4.1% |
| Na alkyl sulfate (branched) | 9.4% | 9.6% | | 9.4% | 9.6% |
| alkyl ethoxylate | | | 3.5% | | |
| type A zeolite | 37.4% | 35.4% | 26.8% | 37.4% | 35.4% |
| sodium carbonate | 22.3% | 22.5% | 35.9% | 22.3% | 22.5% |
| sodium sulfate | 1.0% | | 18.8% | 1.0% | |
| sodium silicate | | | 2.2% | | |
| protease | 0.1% | 0.2% | | 0.1% | 0.2% |
| sodium polyacrylate | 1.0% | 1.2% | 0.7% | 1.0% | 1.2% |
| carboxymethylcellulose | | | 0.1% | | |
| PEG 600 | | 0.5% | | | 0.5% |
| PEG 4000 | | 2.2% | | | 2.2% |
| DTPA | 0.7% | 0.6% | | 0.7% | 0.6% |
| fluorescent whitening agent | 0.1% | 0.1% | 0.1% | 0.1% | 0.1% |
| sodium percarbonate | | 5.0% | | | 5.0% |
| sodium nonanoyloxybenzenesulfonate | | 5.3% | | | 5.3% |
| silicone suds suppressor | 0.02% | 0.02% | | 0.02% | 0.02% |
| perfume | 0.3% | 0.3% | 0.2% | 0.3% | 0.3% |
| MBC-1 | 0.03 | - | - | - | - |
| MBC-2 | - | 0.05 | - | - | 0.13 |
| MBC-9 | - | - | 0.19 | - | - |
| MBC-10 | - | - | - | 0.04 | - |
| Bleaching Primer: peracetic acid | - | - | - | - | 0.002 |
| Bleaching Primer: dilauroyl peroxide | 0.03 | 0.003 | - | 0.01 | 0.04 |
| Bleaching Primer: PAP | - | - | 0.09 | - | - |
| Primary Oxidant: tert-butyl hydroperoxide | - | - | - | - | - |
| water, other optional agents/components* | balance | balance | balance | balance | Balance |
| TOTAL | 100.0% | 100.0% | 100.0% | 100.0% | 100.0% |
| * Other optional agents/components include suds suppressors, structuring agents like NaSWT (Hydrogenated Castor Oil, Anionic Premix), Mica pearlescent aesthetic enhancer | | | | | |

**Liquid Fabric Care Formulations:** Table 4 provides examples of liquid fabric care compositions which include at least one metal bleach catalyst and a bleaching primer. The ingredients detailed in Table 4 are in weight percentages or parts per million of the total composition.

**Table 4 - Liquid Fabric Care Formulations**

| Ingredient | A | B | C | D |
|---|---|---|---|---|
| Fabric Softening Active [a] | 13.70% | 13.70% | 13.70% | 13.70% |

(continued)

| Ingredient | A | B | C | D |
|---|---|---|---|---|
| Ethanol | 2.14% | 2.14% | 2.14% | 2.14% |
| Cationic Starch [b] | 2.17% | 2.17% | 2.17% | 2.17% |
| Perfume | 1.45% | 1.45% | 1.45% | 1.45% |
| Phase Stabilizing Polymer [c] | 0.21% | 0.21% | 0.21% | 0.21% |
| Calcium Chloride | 0.147% | 0.147% | 0.147% | 0.147% |
| DTPA [d] | 0.007% | 0.007% | 0.007% | 0.007% |
| Preservative [e] | 5 ppm | 5 ppm | 5 ppm | 5 ppm |
| Antifoam [f] | 0.015% | 0.015% | 0.015% | 0.015% |
| MBC-1 | 0.03 | - | - | - |
| MBC-2 | - | 0.05 | - | - |
| MBC-3 | - | - | 0.19 | - |
| MBC-4 | - | - | - | 0.04 |
| Bleaching Primer: peracetic acid | - | - | - | - |
| Bleaching Primer: dilauroyl peroxide | 0.03 | 0.003 | - | 0.01 |
| Bleaching Primer: PAP | - | - | 0.09 | - |
| Primary Oxidant: tert-butyl hydroperoxide | - | - | - | - |
| Tinopal CBS-X [g] | 0.2 | 0.2 | 0.2 | 0.2 |
| Ethoquad C/25 [h] | 0.26 | 0.26 | 0.26 | 0.26 |
| Ammonium Chloride | 0.1% | 0.1% | 0.1% | 0.1% |
| Hydrochloric Acid | 0.012% | 0.012% | 0.012% | 0.012% |
| Deionized Water | Balance | Balance | Balance | Balance |
| TOTAL | 100% | 100% | 100% | 100% |

Footnotes for the compositions of A-D in Table 4: [a] N,N-di(tallowoyloxyethyl)-N,N-dimethylammonium chloride.
[b] Cationic starch based on common maize starch or potato starch, containing 25% to 95% amylose and a degree of substitution of from 0.02 to 0.09, and having a viscosity measured as Water Fluidity having a value from 50 to 84.
[c] Copolymer of ethylene oxide and terephthalate having the formula described in US 5,574,179 at co1.15, lines 1-5, wherein each X is methyl, each n is 40, u is 4, each $R^1$ is essentially 1,4-phenylene moieties, each $R^2$ is essentially ethylene, 1,2-propylene moieties, or mixtures thereof.
[d] Diethylenetriaminepentaacetic acid.
[e] KATHON® CG available from Rohm and Haas Co.
[f] Silicone antifoam agent available from Dow Corning Corp. under the trade name DC2310.
[g] Disodium 4,4'-bis-(2-sulfostyryl) biphenyl, available from Ciba Specialty Chemicals.
[h] Cocomethyl ethoxylated [15] ammonium chloride, available from Akzo Nobel.

**Bleach and Laundry Additive Formulations:** Table 5 provides examples of bleach and laundry additive compositions which include at least one metal bleach catalyst and a bleaching primer. The ingredients detailed in Table 5 are in parts per million of the total composition

**Table 5 - Bleach & Laundry Additive Detergent Formulations**

| Ingredient | A | B | C | D | E | F |
|---|---|---|---|---|---|---|
| Metal Bleach Catalyst (1) | 0.25 | 0.11 | 0.43 | 0.58 | 1.6 | 0.05 |
| Detergent (2) | 800 | 450 | 280 | 1200 | 2200 | 200 |

(continued)

| Ingredient | A | B | C | D | E | F |
|---|---|---|---|---|---|---|
| Primary Oxidant (3) | - | - | - | 200 | 500 | - |
| Bleaching Primer (4) | 20 | 2 | 10 | 8 | 15 | 5 |
| Chelant (5) | - | 5 | 2 | 1 | - | - |
| Footnotes for the compositions of A-F in Table 5: (1) is a metal bleach catalyst selected from MBC-1 through MBC-10<br>(2) is a commercial detergent or laundry additive, e.g., TIDE or ARIEL having no bleach or transition-metal bleach catalyst; or another conventional detergent power, for example one build with sodium carbonate and/or Zeolite A or P.<br>(3) is any hydroperoxide such as t-butyl and cumene hydroperoxide or lipid hydroperoxides, such as the hydroperoxide of linoleic or linolenic acid.<br>(4) is any hydrophobic diacyl peroxide having a carbon chain length in the indicated range, for example, dilauroyl peroxide (C12-DAP)<br>(5) is any commercial phosphonate chelant, e.g., DTPMP or HEDP, or one from the DEQUEST series, or a S, S-ethylenediaminedisuccinate sodium salt, or a polyamino carboxylic acid salt, e.g., DTPA, or any catechol-based chelant such 4,5-dihydroxy-1,3-benzenedisulfonic acid disodium salt (TIRON). | | | | | | |

**Bleach & Laundry Additive Detergent Formulations:** Tables 6 through 13 provide examples of bleach and laundry additive detergent compositions which include at least one metal bleach catalyst and a bleaching primer. The ingredients detailed in the Tables are in weight percentages of the total composition.

**Table 6 - Bleach & Laundry Additive Detergent Formulations**

| Ingredient | A | B | C | D | E | F |
|---|---|---|---|---|---|---|
| AES[11] | 2.0 | 4.0 | - | 12.0 | 5.0 | 10.0 |
| LAS[12] | 10.0 | 10.0 | 23.6 | 22.0 | 12.0 | 26.8 |
| Zwitterionic ethoxylated quaternized sulfated hexamethylene diamine[13] | 1.0 | - | - | - | - | 2.0 |
| HSAS[14] | - | - | - | 6.5 | 3.8 | - |
| Nonionic Surfactant (NI)[15] | - | - | - | - | 3.6 | - |
| Fatty acid[16] | - | - | - | - | 4.4 | - |
| Amine Oxide[17a] | - | - | - | 2.1 | - | - |
| DTPA: Diethylene triamine pentaacetic acid | 0.51 | 0.77 | 1.5 | - | - | 2.5 |
| 4,5-Dihydroxy-1,3-benzenedisulfonic acid disodium salt | 1.82 | - | - | - | - | 2.5 |
| 1,2-propandiol | 10 | 10 | - | - | 5 | 20.0 |
| MBC-1 | 0.03 | - | - | - | - | - |
| MBC-2 | - | 0.05 | - | - | 0.11 | 0.05 |
| MBC-3 | - | - | 0.19 | - | - | - |
| MBC-4 | - | - | - | 0.04 | - | - |
| Bleaching Primer: peracetic acid | - | - | - | 0.002 | - | - |
| Bleaching Primer: dilauroyl peroxide | 0.03 | 0.003 | - | 0.01 | 0.04 | 0.06 |
| Bleaching Primer: PAP | - | - | 0.09 | - | - | - |
| Primary Oxidant: tert-butyl hydroperoxide | - | - | - | 0.27 | - | - |
| Perfume | 0.1 | 0.5 | 0.7 | 0.2 | - | - |

(continued)

| Ingredient | A | B | C | D | E | F |
|---|---|---|---|---|---|---|
| Brightener 49 | 0.21 | - | - | 0.15 | - | 0.20 |
| water, other optional agents/components* | to 100% balance | to 100% balance | to 100% balance | to 100% balance | to 100% balance | to 100% balance |
| pH adjusted with NaOH to: | 5.1 | 8.3 | 7.5 | 6.6 | 4.3 | 5.7 |

**Table 7 - Bleach & Laundry Additive Detergent Formulations**

| Ingredients | A | B | C | D | E | F |
|---|---|---|---|---|---|---|
| AES[11] | 3.4 | 10.3 | - | 24.0 | 7.0 | 9.0 |
| LAS[12] | 8.8 | 14.6 | 18.5 | 15.0 | 15.0 | 24.7 |
| Zwitterionic ethoxylated quaternized sulfated hexamethylene diamine[13] | 0.4 | - | - | - | - | - |
| HSAS[14] | 3.2 | 6.5 | - | 3.7 | - | - |
| Nonionic Surfactant (NI)[15] | 2.3 | - | 4.1 | - | - | - |
| Fatty acid[16] | 3.0 | - | - | 6.3 | - | - |
| Amine Oxide[17b] | - | - | - | 1.1 | 2.2 | - |
| DTPA: Diethylene triamine pentaacetic acid | 0.51 | - | - | - | - | 2.6 |
| 4,5-Dihydroxy-1,3-benzenedisulfonic acid disodium salt | - | 1.3 | 3.9 | - | - | 1.4 |
| 1,2-propandiol | 10 | - | 20 | 10 | - | 20 |
| MBC-1 | 0.03 | - | - | 0.03 | - | - |
| MBC-2 | - | 0.05 | 0.08 | - | 0.05 | 0.13 |
| MBC-3 | - | - | - | 0.02 | - | - |
| Bleaching Primer: Peroxylauric acid | - | - | 0.12 | - | 0.02 | - |
| Bleaching Primer: dilauroyl peroxide | 0.03 | 0.11 | - | - | 0.15 | 0.13 |
| Bleaching Primer: PAP | - | - | - | 0.009 | - | - |
| Primary Oxidant: tert-butyl hydroperoxide | - | - | 1.3 | - | - | - |
| Perfume | 0.1 | - | 0.7 | 0.2 | - | 0.15 |
| Brightener 49 | 0.21 | - | - | 0.15 | - | 0.18 |
| water, other optional agents/components* | to 100% balance | to 100% balance | to 100% balance | to 100% balance | to 100% balance | to 100% balance |

**Table 8 - Bleach & Laundry Additive Detergent Formulations**

| Ingredients | A | B | C | D | E | F |
|---|---|---|---|---|---|---|
| AES[11] | 4.0 | 6.0 | - | 16.0 | 12.0 | 10.0 |
| LAS[12] | 8.0 | 10.0 | 20.6 | 15.0 | - | 26.1 |
| Bio-HSAS[14b] | - | 1.9 | 3.2 | - | - | - |
| Nonionic Surfactant (NI)[15] | - | - | - | 6.3 | - | - |

(continued)

| Ingredients | A | B | C | D | E | F |
|---|---|---|---|---|---|---|
| Fatty acid[16] | - | - | - | 4.0 | - | - |
| Amine Oxide[17b] | - | - | - | 1.4 | - | - |
| DTPA: Diethylene triamine pentaacetic acid | 0.51 | 0.77 | 1.5 | - | - | 2.6 |
| 4,5-Dihydroxy-1,3-benzenedisulfonic acid disodium salt | 1.82 | - | 3.3 | - | - | 1.4 |
| 1,2-propandiol | - | 10 | - | 20 | 5 | 16 |
| MBC-1 | 0.03 | - | - | - | - | - |
| MBC-2 | - | 0.05 | 0.02 | 0.03 | 0.05 | 0.13 |
| Bleaching Primer: Peroxylauric acid | 0.22 | - | 0.12 | - | - | 0.02 |
| Bleaching Primer: dilauroyl peroxide | 0.43 | 0.005 | - | - | 0.13 | 0.15 |
| Bleaching Primer: succinic acid peroxide | - | - | - | 0.11 | - | - |
| Primary Oxidant: cumene hydroperoxide | - | - | 1.3 | - | - | - |
| Perfume | - | 0.2 | 0.03 | 0.17 | - | 0.15 |
| Brightener | 0.21 | - | - | 0.15 | - | 0.18 |
| water, other optional agents/components* | to 100% balance | to 100% balance | to 100% balance | to 100% balance | to 100% balance | to 100% balance |

**Table 9 - Bleach & Laundry Additive Detergent Formulations**

| Ingredients | A | B | C | D | E | F |
|---|---|---|---|---|---|---|
| AES[11] | 11.3 | 6.0 | 15.4 | 16.0 | 12.0 | 10.0 |
| LAS[12] | 25.6 | 12.0 | 4.6 | - | - | 26.1 |
| MEA-HSAS[14c] | - | - | - | 3.5 | - | - |
| DTPA: Diethylene triamine pentaacetic acid | 0.51 | - | 1.5 | - | - | 2.6 |
| 4,5-Dihydroxy-1,3-benzenedisulfonic acid disodium salt | 1.82 | - | - | - | - | 1.4 |
| 1,2-propandiol | - | 10 | - | - | - | 15 |
| MBC-1 | 0.51 | - | - | - | - | - |
| MBC-2 | - | 0.05 | 0.04 | 0.07 | 0.05 | 0.13 |
| Bleaching Primer: dilauroyl peroxide | 2.8 | - | - | 0.21 | 0.06 | 0.15 |
| Bleaching Primer: dibenzoyl peroxide | - | - | 0.03 | - | - | - |
| Bleaching Primer: didecanoyl peroxide | - | 1.1 | - | - | - | - |
| Copolymer of dimethylterephthalate, 1,2-propylene glycol, methyl capped PEG | 2.0 | | | | | |

(continued)

| Ingredients | A | B | C | D | E | F |
|---|---|---|---|---|---|---|
| Poly(ethyleneimine) ethoxylated, PEI600 E20 | | 1.8 | | | | |
| Acrylic acid/maleic acid copolymer | | | 2.9 | | | |
| Acusol 880 (Hydrophobically Modified Non-Ionic Polyol) | | | | 2.0 | 1.8 | 2.9 |
| Protease | - | - | - | - | 0.1 | 0.1 |
| Natalase | - | - | - | - | - | 0.02 |
| Perfume | - | 0.2 | 0.03 | 0.17 | - | 0.15 |
| Brightener | 0.21 | - | - | 0.15 | - | 0.18 |
| water, other optional agents/components* | to 100% balance | to 100% balance | to 100% balance | to 100% balance | to 100% balance | to 100% balance |

**Table 10 - Bleach & Laundry Additive Detergent Formulations**

| Ingredients | A | B | C | D | E | F |
|---|---|---|---|---|---|---|
| AES[11] | - | 5.2 | - | - | - | 9.3 |
| HLAS[12] | 12.5 | 8.9 | 20.0 | 11.6 | 20.0 | - |
| Soil Anti-Redeposition Agent | 0.5 | - | - | - | - | - |
| Alcohol Alkoxylate[15b] | 8.0 | 10.2 | 18.8 | 12.5 | - | - |
| Alcohol Alkoxylate[15c] | 1.5 | - | - | - | - | - |
| MGDA (Trilon M) | 0.5 | - | - | 3.3 | 2.3 | 1.0 |
| 1,2-propandiol | 10.0 | 5.7 | - | 6.9 | - | - |
| MBC-2 | 0.013 | 0.049 | 0.005 | 0.033 | 0.11 | 0.010 |
| Primary Oxidant: tert-butyl hydroperoxide | - | 8.5 | - | - | - | 1.8 |
| Bleaching Primer: dilauroyl peroxide | 0.11 | 0.31 | - | - | 0.06 | 0.11 |
| Bleaching Primer: dibenzoyl peroxide | - | - | 0.05 | 0.01 | - | - |
| Lipase[18] | - | - | 0.15 | 0.07 | 0.23 | 0.59 |
| Perfume | 0.50 | - | 0.30 | 0.87 | 0.11 | - |
| Brightener | 0.30 | - | 0.26 | - | 0.29 | - |
| NaOH (92% total) | 0.75 | 1.6 | - | 1.9 | 1.0 | 2.2 |
| water, other optional agents/components* | to 100% balance | to 100% balance | to 100% balance | to 100% balance | to 100% balance | to 100% balance |

**Table 11 - Unit Dose Detergent Formulations**

| Single compartment unit-dose laundry detergent articles, encapsulated in a polyvinyl alcohol film. | | |
|---|---|---|
| | A (38g) | B (38g) |
| [11] AES | 8.8 | -- |

(continued)

| Single compartment unit-dose laundry detergent articles, encapsulated in a polyvinyl alcohol film. | | |
|---|---|---|
| | A (38g) | B (38g) |
| 12 LAS | 14.8 | 12.4 |
| C12-14 alkyl 7-ethoxylate | 3.0 | 11.0 |
| C12-18 Fatty acid | 4.0 | -- |
| MBC-1 | 0.05 | -- |
| MBC-2 | -- | 0.02 |
| Bleaching Primer: dilauroyl peroxide | 0.31 | -- |
| Bleaching Primer: dibenzoyl peroxide | - | 0.31 |
| Enzymes[19] | 2.3 | 2.3 |
| PEG-PVAc polymer | 2.0 | 2.0 |
| Monoethanol amine | To pH 7.5 | To pH 7.5 |
| Water | 9.5 | 9.5 |
| Solvent | 18 | 18 |
| Miscellaneous/Minors | To 100% | To 100% |

**Table 12 - Unit Dose Detergent Formulations**

| Dual compartment unit-dose laundry detergent articles, encapsulated in a polyvinyl alcohol film, wherein the bleaching primer is in a separate compartment from the other laundry ingredients. | | |
|---|---|---|
| **Ingredient name** | **Compartment 1 (32g)** | **Compartment 2 (4g)** |
| 11 AES | 11.8 | 11.8 |
| 12 LAS | 12.3 | 12.3 |
| MBC-2 | 0.03 | |
| Bleaching Primer: dilauroyl peroxide | 0.31 | -- |
| Lipase[18] | -- | 1.8 |
| Enzymes[19] | 1.3 | -- |
| Monoethanol amine | To pH 7.5 | To pH 7.5 |
| Water | 8.5 | 8.5 |
| Solvent | 19 | 19 |
| DTPA: Diethylene triamine pentaacetic acid | 1.1 | 1.1 |
| Miscellaneous/Minors | To 100% | To 100% |

**Table 13 - Unit Dose Detergent Formulations**

| A 3-compartment unit-dose laundry detergent article, encapsulated in a polyvinyl alcohol film, wherein the bleaching primer, the metal bleach catalyst, and the enzymes are in separate compartments. | | | |
|---|---|---|---|
| Ingredient name | Compartment 1 (30g) | Compartment 2 (3g) | Compartment 3 (3g) |
| Linear alkyl benzene sulfonic acid | 14.8 | -- | 14.8 |

(continued)

| A 3-compartment unit-dose laundry detergent article, encapsulated in a polyvinyl alcohol film, wherein the bleaching primer, the metal bleach catalyst, and the enzymes are in separate compartments. | | | |
|---|---|---|---|
| Ingredient name | Compartment 1 (30g) | Compartment 2 (3g) | Compartment 3 (3g) |
| Phthalimido peroxycaproic acid (PAP)[10] | -- | 5.1 | -- |
| MBC-2 | 0.02 | -- | -- |
| C12-14 alkyl ethoxy 3 sulphate MEA salt | 8.8 | -- | 8.8 |
| C12-14 alkyl 7-ethoxylate | 13.0 | -- | 13.0 |
| C12-18 Fatty acid | 15.0 | -- | 15.0 |
| PEG-PVAc polymer | 2.0 | --- | -- |
| Monoethanol amine | To pH 7.5 | -- | To pH 7.5 |
| Solvent | 18.6 | -- | 20 |
| Mineral Oil | | To 100% | |
| Colour | 0.008 | -- | 0.02 |
| Water | 9.5 | -- | 9.5 |
| Miscellaneous/Minors | To 100% | -- | To 100% |

Footnotes for the compositions of Tables 6-13: [10] Phthalimido peroxycaproic acid (PAP)
[11] AES = $C_{10}$-$C_{18}$ alkyl ethoxy sulfate supplied by Shell Chemicals.
[12] LAS = $C_9$-$C_{15}$ linear alkyl benzene sulfonate supplied by Huntsman Corp
[13] Soil Anti-Redeposition Agent = Zwitterionic ethoxylated quaternized sulfated hexamethylene diamine available under the tradename LUTENSIT® from BASF (Ludwigshafen, Germany) and such as those described in WO 01/05874
[14] HSAS = HC1617HSAS (mid-branched primary alkyl sulfate surfactants having an average carbon chain length of from 16 to 17)
[14b] Bio-HSAS
[14c] MEA-HSAS
[15] Nonionic Surfactant (NI) = Nonionic C24EO9
[15b] Nonionic Surfactant (NI) = Alcohol Ethoxylate (AE) = Surfonic L 24-7 (Laureth-7)
[15c] Nonionic Surfactant (NI) = Alcohol Ethoxylate (AE) = Surfonic L 24-3 (Laureth-3)
[16] Fatty acid = octadecanoic acid
[17a] Amine Oxide = DMDAO (dimethyldodecyl amine oxide)
[17b] Amine Oxide = CAPOA (cocoamidopropyldimethyl amine oxide)
[18] Lipase = Lipex 100L from Novozymes; activity = 18.6mg EP/g
[19] Enzymes = Amylase and protease
* Other optional agents/components include suds suppressors, structuring agents like NaSWT (Hydrogenated Castor Oil, Anionic Premix), Mica pearlescent aesthetic enhancer

Key for the specific metal bleach catalysts employed in the formulations of Tables 1-13:

**MBC-1:** 5,12-dimethyl-1,5,8,12-tetraaza-bicyclo[6.6.2]hexadecane manganese (II) chloride
**MBC-2:** 5,12-diethyl-1,5,8,12-tetraaza-bicyclo[6.6.2]hexadecane manganese (II) chloride
**MBC-3:** 5-ethyl-12-methyl-1,5,8,12-tetraaza-bicyclo[6.6.2]hexadecane manganese (II) chloride
**MBC-4:** 5,12-dipropyl-1,5,8,12-tetraaza-bicyclo[6.6.2]hexadecane manganese (II) chloride
**MBC-5:** 5,12-dibenzyl-1,5,8,12-tetraaza-bicyclo[6.6.2]hexadecane manganese (II) chloride
**MBC-6:** 5-n-octyl-12-methyl-1,5,8,12-tetraaza-bicyclo[6.6.2]hexadecane manganese (II) chloride
**MBC-7:** Diaquo-5,12-diethyl-1,5,8,12-tetraazabicyclo[6.6.2]hexadecane manganese(II) hexafluorophosphate
**MBC-8:** Aquo-hydroxy-5,12-dimethyl-1,5,8,12-tetraazabicyclo[6.6.2]hexadecane manganese(III) hexafluorophosphate

**MBC-9:** Aquo-hydroxy-5,12-diethyl-1,5,8,12-tetraazabicyclo[6.6.2]hexadecane Manganese(III) Hexafluorophosphate

**MBC-10:** Dichloro-5,12-diethyl-1,5,8,12 tetraazabicyclo[6.6.2]hexadecane Manganese(III) Hexafluorophosphate

While particular embodiments of the present disclosure have been illustrated and described, it would be obvious to those skilled in the art that various other changes and modifications can be made without departing from the scope of the invention. It is therefore intended to cover in the appended claims all such changes and modifications that are within the scope of this invention.

## Claims

1. A composition comprising:

   a. a metal bleach catalyst which is a complex of a transition metal and a macrocyclic ligand, wherein the metal bleach catalyst is present in the composition in an amount ranging from 0.0001% to 10%, based on total weight of the composition, and wherein the metal bleach catalyst is preferably a complex of a transition metal and a cross-bridged macropolycyclic ligand; and
   b. a bleaching primer, wherein the bleaching primer is selected from a group consisting of diacyl peroxide, and mixtures thereof, and wherein the bleaching primer is preferably present in the composition in an amount ranging from 0.0001% to 1.0%, based on total weight of the composition;

   wherein the composition has a molar ratio of bleaching primer to metal bleach catalyst of from 1:20 to 100:1, preferably from 1:2 to 50:1, and more preferably from 1:1 to 20:1; and wherein the composition further comprises a primary oxidant selected from a group consisting of hydroperoxides, dialkyl peroxides, peroxyketals, cyclic peroxides, and mixtures thereof.

2. The composition of any preceding claim, wherein the diacyl peroxide is selected from a group consisting of dilauroyl peroxide and dibenzoylperoxide.

3. The composition of any preceding claim, wherein the transition metal of the metal bleach catalyst is manganese based and the cross-bridged macropolycyclic ligand of the metal bleach catalyst has the following structure:

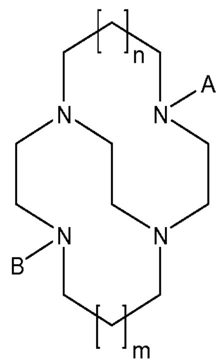

   wherein n and m are integers individually selected from 1 and 2; and A and B are independently selected from a group consisting of hydrogen or methyl, ethyl, propyl, isopropyl, butyl, isobutyl, sec-butyl, tert-butyl, $C_5$-$C_{20}$ alkyl, and benzyl, optionally substituted with moieties selected from the group consisting of COOM, wherein M is selected from H and a charge balancing metal ion, CN and mixtures thereof.

4. The composition of any preceding claim, wherein the metal bleach catalyst is 5,12-diethyl-1,5,8,12-tetraaza-bicyclo[6.6.2]hexadecane manganese (II) chloride.

5. The composition of any preceding claim, further comprising a lipase.

6. A bleaching method comprising:

a. providing an oxidizable substrate;
b. providing a bleaching composition that comprises:

i. a metal bleach catalyst which is a complex of a transition metal and a cross-bridged macropolycyclic ligand, wherein the metal bleach catalyst is present in an amount ranging from 0.0001% to 10%, based on total weight of the composition; and
ii. a bleaching primer, wherein the bleaching primer is selected from a group consisting of diacyl peroxide, and mixtures thereof, and wherein the bleaching primer is preferably present in the composition in an amount ranging from 0.0001 % to 1.0%, based on total weight of the composition;

wherein the composition preferably has a molar ratio of bleaching primer to metal bleach catalyst of from 1:20 to 100:1, more preferably from 1:1 to 20:1; and
c. contacting the oxidizable substrate with the bleaching composition;

wherein a Lag Time Reduction Index for the metal bleach catalyst is greater than or equal to 20%, as measured by Bleaching Lag Time Protocol I;
and wherein the bleaching composition further comprises a primary oxidant selected from a group consisting of hydroperoxides, dialkyl peroxides, peroxyketals, cyclic peroxides, and mixtures thereof.

**7.** The method of claim 6, wherein the method further comprises contacting the oxidizable substrate with a lipase.

**8.** The method of any of claims 6 and 7, wherein the transition metal of the metal bleach catalyst is manganese based and the cross-bridged macropolycyclic ligand of the metal bleach catalyst has the following structure:

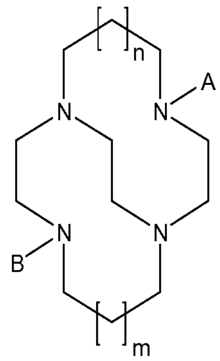

wherein n and m are integers individually selected from 1 and 2; and A and B are independently selected from a group consisting of hydrogen or methyl, ethyl, propyl, isopropyl, butyl, isobutyl, sec-butyl, tert-butyl, $C_5$-$C_{20}$ alkyl, and benzyl, optionally substituted with moieties selected from the group consisting of COOM, wherein M is selected from H and a charge balancing metal ion, CN and mixtures thereof.

**9.** The method of any of claims 6 to 8, wherein the metal bleach catalyst is 5,12-diethyl-1,5,8,12-tetraaza-bicyclo[6.6.2]hexadecane manganese (II) chloride.

**10.** The method of any of claims 6 to 9, wherein the oxidizable substrate further comprises a primary oxidant.

**Patentansprüche**

**1.** Zusammensetzung, umfassend:

a. einen Metallbleichmittelkatalysator, der ein Komplex aus einem Übergangsmetall und einem macrocyclischen Liganden ist, wobei der Bleichmittelkatalysator in der Zusammensetzung in einer Menge vorliegt, die im Bereich von 0,0001 % bis 10 %, basierend auf dem Gesamtgewicht der Zusammensetzung, liegt, und wobei der Metallbleichmittelkatalysator bevorzugt ein Komplex aus einem Übergangsmetall und einem querverbrückten macropolycyclischen Liganden ist; und
b. einen bleichenden Primer, wobei der bleichende Primer ausgewählt ist, aus einer Gruppe, bestehend aus

einem Diacylperoxid und Gemischen davon, und wobei der bleichende Primer bevorzugt in der Zusammensetzung in einer Menge vorliegt, die im Bereich von 0,0001 % bis 1,0 %, basierend auf dem Gesamtgewicht der Zusammensetzung, liegt;

wobei die Zusammensetzung ein Molverhältnis von bleichendem Primer zu Metallbleichmittelkatalysator von 1:20 bis 100:1 aufweist, bevorzugt von 1:2 bis 50:1, und besonders bevorzugt von 1:1 bis 20:1; und wobei die Zusammensetzung ferner ein Primäroxidationsmittel umfasst, das ausgewählt ist aus einer Gruppe, bestehend aus Hydroperoxiden, Dialkylperoxiden, Peroxyketalen, cyclischen Peroxiden und Gemischen davon.

2. Zusammensetzung nach einem der vorstehenden Ansprüche, wobei das Diacylperoxid ausgewählt ist aus einer Gruppe, bestehend aus Dilauroylperoxid und Dibenzoylperoxid.

3. Zusammensetzung nach einem der vorstehenden Ansprüche, wobei das Übergangsmetall des Metallbleichmittelkatalysators auf Mangan basiert und der querverbrückte macropolycyclische Ligand des Metallbleichmittelkatalysators die folgende Struktur aufweist:

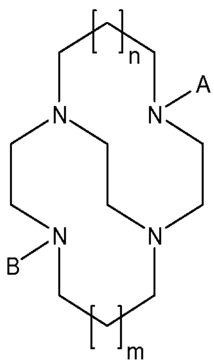

wobei n und m ganze Zahlen sind, die unabhängig aus 1 und 2 ausgewählt sind; und A und B unabhängig aus einer Gruppe ausgewählt sind bestehend aus Wasserstoff oder Methyl, Ethyl, Propyl, Isopropyl, Butyl, Isobutyl, sec-Butyl, tert-Butyl, $C_5$-$C_{20}$-Alkyl und Benzyl, wahlweise mit Einheiten substituiert, die aus der Gruppe ausgewählt sind bestehend aus COOM, wobei M ausgewählt ist aus H, einem ladungsausgleichenden Metallion, CN und Gemischen davon.

4. Zusammensetzung nach einem der vorstehenden Ansprüche, worin der Metallbleichmittelkatalysator 5,12-Diethyl-1,5,8,12-tetraaza-bicyclo[6.6.2]hexadecanmangan(II)chlorid ist.

5. Zusammensetzung nach einem der vorstehenden Ansprüche, ferner umfassend eine Lipase.

6. Bleichverfahren, umfassend:

a. Bereitstellung eines oxidierbaren Substrats;
b. Bereitstellung einer Bleichmittelzusammensetzung, die Folgendes umfasst:

i. einen Metallbleichmittelkatalysator, der ein Komplex aus einem Übergangsmetall und einem querverbrückten macropolycyclischen Liganden ist, wobei der Metallbleichmittelkatalysator in einer Menge vorliegt, die im Bereich von 0,0001 % zu 10 %, basierend auf dem Gesamtgewicht der Zusammensetzung, liegt; und
ii. einen bleichenden Primer, wobei der bleichende Primer ausgewählt ist aus einer Gruppe bestehend aus einem Diacylperoxid und Gemischen davon, und wobei der bleichende Primer bevorzugt in der Zusammensetzung in einer Menge vorliegt, die im Bereich von 0,0001 % bis 1,0 %, basierend auf dem Gesamtgewicht der Zusammensetzung, liegt;

wobei die Zusammensetzung bevorzugt ein Molverhältnis von bleichendem Primer zu Metallbleichkatalysator im Bereich von 1:20 bis 100:1, besonders bevorzugt von 1:1 bis 20:1 aufweist, und
c. Inkontaktbringen des oxidierbaren Substrats mit der Bleichmittelzusammensetzung;
wobei ein Verzögerungszeit-Reduktionsindex für den Metallbleichkatalysator größer oder gleich 20 % ist, gemessen durch das Bleichverzögerungsprotokoll I;

und wobei die Bleichmittelzusammensetzung ferner ein primäres Oxidationsmittel umfasst, das ausgewählt ist aus der Gruppe bestehend aus Hydroxyperoxiden, Dialkylperoxiden, Peroxyketalen, cyclischen Peroxiden und Gemischen davon.

**7.** Verfahren nach Anspruch 6, wobei das Verfahren ferner das Inkontaktbringen des oxidierbaren Substrats mit einer Lipase umfasst.

**8.** Verfahren nach einem der Ansprüche 6 und 7, wobei das Übergangsmetall des Metallbleichkatalysators auf Mangan basiert und der querverbrückte macropolycyclische Ligand des Metallbleichmittelkatalysators die folgende Struktur aufweist:

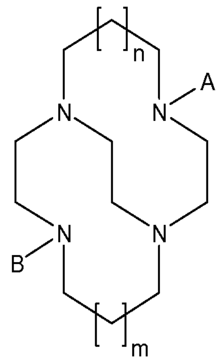

wobei n und m ganze Zahlen sind, die unabhängig aus 1 und 2 ausgewählt sind; und A und B unabhängig aus einer Gruppe ausgewählt sind bestehend aus Wasserstoff oder Methyl, Ethyl, Propyl, Isopropyl, Butyl, Isobutyl, sec-Butyl, tert-Butyl, $C_5$-$C_{20}$-Alkyl und Benzyl, wahlweise mit Einheiten substituiert, die aus der Gruppe ausgewählt sind bestehend aus COOM, wobei M ausgewählt ist aus H, einem ladungsausgleichenden Metallion, CN und Gemischen davon.

**9.** Verfahren einem der vorstehenden Ansprüche 6 bis 8, worin der Metallbleichmittelkatalysator 5,12-Diethyl-1,5,8,12-tetraaza-bicyclo[6.6.2]hexadecanmangan(II)chlorid ist.

**10.** Verfahren nach einem der Ansprüche 6 bis 9, wobei das oxidierbare Substrat ferner ein primäres Oxidationsmittel umfasst.

## Revendications

**1.** Composition comprenant :

a. un catalyseur de blanchiment à base de métal qui est un complexe d'un métal de transition et d'un ligand macrocyclique, le catalyseur de blanchiment à base de métal étant présent dans la composition en une quantité allant de 0,0001 % à 10 %, sur la base du poids total de la composition, et le catalyseur de blanchiment à base de métal étant de préférence un complexe d'un métal de transition et d'un ligand macrocyclique pontant croisé ; et
b. un initiateur de blanchiment, l'initiateur de blanchiment étant choisi dans un groupe constitué de peroxyde de diacyle, et de mélanges de celui-ci, et l'initiateur de blanchiment étant de préférence présent dans la composition en une quantité allant de 0,0001 % à 1,0 %, sur la base du poids total de la composition ;

la composition ayant un rapport molaire d'initiateur de blanchiment à catalyseur de blanchiment à base de métal allant de 1:20 à 100:1, de préférence de 1:2 à 50:1 et plus préférablement de 1:1 à 20:1 ; et la composition comprenant en outre un oxydant primaire choisi dans un groupe constitué d'hydroperoxydes, de peroxydes de dialkyle, de peroxycétals, de peroxydes cycliques et de mélanges de ceux-ci.

**2.** Composition selon une quelconque revendication précédente, le peroxyde de diacyle étant choisi dans un groupe constitué de peroxyde de dilauroyle et de peroxyde de dibenzoyle.

3. Composition selon une quelconque revendication précédente, le métal de transition du catalyseur de blanchiment à base de métal étant à base de manganèse et le ligand macrocyclique pontant croisé du catalyseur de blanchiment à base de métal ayant la structure suivante :

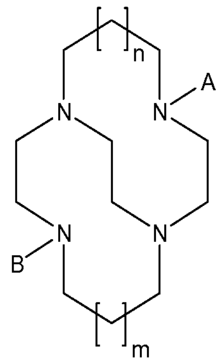

dans laquelle n et m sont des entiers choisis individuellement parmi 1 et 2 ; et A et B sont indépendamment choisis dans un groupe constitué d'hydrogène ou de méthyle, éthyle, propyle, isopropyle, butyle, isobutyle, sec-butyle, tert-butyle, alkyle en $C_5$ à $C_{20}$, et benzyle, éventuellement substitués par des fragments choisis dans le groupe constitué de COOM, où M est choisi parmi H et un ion équilibrant la charge, CN et des mélanges de ceux-ci.

4. Composition selon une quelconque revendication précédente, le catalyseur de blanchiment à base de métal étant le 5,12-diméthyl-1,5,8,12-tétraaza-bicyclo[6.6.2]hexadécane-chlorure de manganèse(II).

5. Composition selon une quelconque revendication précédente, comprenant, en outre, une lipase.

6. Procédé de blanchiment comprenant :

a. l'utilisation d'un substrat oxydable ;
b. l'utilisation d'une composition de blanchiment qui comprend :

i. un catalyseur de blanchiment à base de métal qui est un complexe d'un métal de transition et d'un ligand macrocyclique pontant croisé, le catalyseur de blanchiment à base de métal étant présent en une quantité allant de 0,0001 % à 10 %, sur la base du poids total de la composition ; et
ii. un initiateur de blanchiment, l'initiateur de blanchiment étant choisi dans un groupe constitué de peroxyde de diacyle, et de mélanges de celui-ci, et l'initiateur de blanchiment étant de préférence présent dans la composition en une quantité allant de 0,0001 % à 1,0 %, sur la base du poids total de la composition ;

la composition ayant de préférence un rapport molaire d'initiateur de blanchiment à catalyseur de blanchiment à base de métal allant de 1:20 à 100:1, plus préférablement de 1:1 à 20:1 ; et
c. la mise en contact du substrat oxydable avec la composition de blanchiment ;
un Indice de réduction du temps de latence du catalyseur de blanchiment à base de métal étant supérieur ou égal à 20 %, tel que mesuré par le Protocole I de temps de latence de blanchiment ;
et la composition de blanchiment comprenant en outre un oxydant primaire choisi dans un groupe constitué d'hydroperoxydes, de peroxydes de dialkyle, de peroxycétals, de peroxydes cycliques et de mélanges de ceux-ci.

7. Procédé selon la revendication 6, le procédé comprenant en outre la mise en contact du substrat oxydable avec une lipase.

8. Procédé selon l'une quelconque des revendications 6 et 7, le métal de transition du catalyseur de blanchiment à base de métal étant à base de manganèse et le ligand macrocyclique pontant croisé du catalyseur de blanchiment à base de métal ayant la structure suivante :

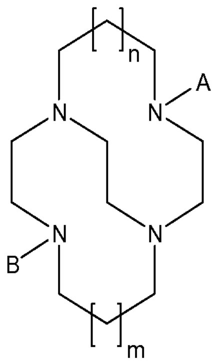

dans laquelle n et m sont des entiers choisis individuellement parmi 1 et 2 ; et A et B sont indépendamment choisis dans un groupe constitué d'hydrogène ou de méthyle, éthyle, propyle, isopropyle, butyle, isobutyle, sec-butyle, tert-butyle, alkyle en $C_5$ à $C_{20}$, et benzyle, éventuellement substitués par des fragments choisis dans le groupe constitué de COOM, où M est choisi parmi H et un ion équilibrant la charge, CN et des mélanges de ceux-ci.

**9.** Procédé selon l'une quelconque des revendications 6 à 8, le catalyseur de blanchiment à base de métal étant le 5,12-diméthyl-1,5,8,12-tétraaza-bicyclo[6.6.2]hexadécane-chlorure de manganèse(II).

**10.** Procédé selon l'une quelconque des revendications 6 à 9, le substrat oxydable comprenant en outre un oxydant primaire.

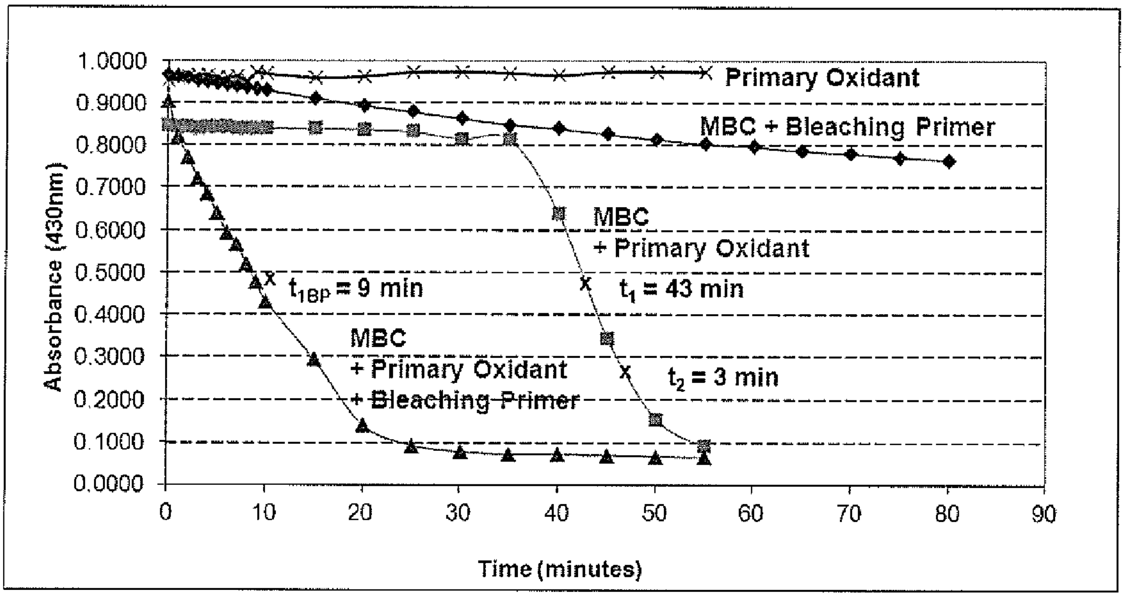
1.0000
0.9000
0.8000
0.7000
0.6000
0.5000
0.4000
0.3000
0.2000
0.1000
0.0000
Absorbance (430nm)
0
10
20
30
40
50
60
70
80
90
Time (minutes)
Primary Oxidant
MBC + Bleaching Primer
MBC
+ Primary Oxidant
t1 = 43 min
t2 = 3 min
t1BP = 9 min
MBC
+ Primary Oxidant
+ Bleaching Primer

Figure 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 6306812 B
- WO 09839098 A1
- WO 09839406 A1
- US 20090054293 A1
- WO 9839098 A
- WO 9839406 A
- US 2220099 A
- US 2477383 A
- US 6136769 A
- US 6004922 A
- WO 9835002 A
- WO 9835003 A
- WO 9835004 A
- WO 9835005 A
- WO 9835006 A
- US 4228042 A
- US 4239660 A
- US 4260529 A
- US 6022844 A
- US 6221825 B
- WO 0047708 A
- US 3929678 A
- US 5576282 A
- US 6326348 B
- US 4483781 A, Hartman
- US 4634551 A, Burns
- EP 0133354 A, Banks
- US 4412934 A, Chung
- US 5487818 A
- US 5310934 A
- US 5246620 A
- US 5279757 A
- US 5132431 A
- US 4217105 A
- US 5916481 A
- EP 91202655 A
- US 5346588 A
- US 5574179 A
- WO 0105874 A


### Non-patent literature cited in the description


- Bleaching Agents (Survey). Kirk Othmer's Encyclopedia of Chemical Technology. John Wiley & Sons, 1992, vol. 4, 271-300
- **KIRK OTHMER.** Encyclopedia of Chemical Technology. John Wiley and Sons, 1982, vol. 17, 27-90